# FASCICULE DE BREVET EUROPEEN

(11) **EP 4 172 665 B1**
(45) Date de publication et mention de la délivrance du brevet: **04.12.2024**
(21) Numéro de dépôt: 21739603.5
(22) Date de dépôt: 29.06.2021
(51) Int. Cl.: G01W 1/00

(54) **PROCÉDÉ ET INSTALLATION POUR ESTIMER UN PARAMÈTRE CARACTÉRISTIQUE DE LA TURBULENCE ATMOSPHÉRIQUE**
VERFAHREN UND SYSTEM ZUR SCHÄTZUNG EINES CHARAKTERISTISCHEN PARAMETERS DER ATMOSPHÄRISCHEN TURBULENZ
METHOD AND SYSTEM FOR ESTIMATING A CHARACTERISTIC ATMOSPHERIC TURBULENCE PARAMETER

(30) Priorité: 29.06.2020 FR 2006810
(43) Date de publication de la demande: 03.05.2023
(73) Titulaire: Unistellar, 13008 Marseille (FR)
(72) Inventeur: MALVACHE, Arnaud, 13710 FUVEAU (FR)
(74) Mandataire: Roman, Alexis
(86) Numéro de dépôt international: PCT/EP2021/067814
(87) Numéro de publication internationale: WO 2022/002917

(56) Documents cités:
- CN-A- 110 083 977
- US-A1- 2012 078 517
- US-A1- 2019 277 758

## Description

### Domaine technique.

L'invention a pour objets un procédé et une installation pour estimer un paramètre caractéristique de la turbulence atmosphérique.

L'invention se rapporte aux techniques de mesure de propriétés de l'atmosphère utilisant des dispositifs de vision optiques.

### État de la technique.

L'atmosphère terrestre est un milieu inhomogène, qui présente des gradients de température et de pression, des variations de composition chimique, de vitesse et de direction du vent. L'ensemble de ces facteurs génère des turbulences atmosphériques qui varient en fonction de la position et du temps. Ces turbulences atmosphériques modifient la trajectoire et la vitesse des rayons lumineux qui traversent l'atmosphère. La cohérence des ondes est dégradée ce qui se traduit par un flou et/ou une scintillation des objets observés depuis le sol. Ces turbulences atmosphériques peuvent également perturber les communications satellitaires. Il est donc apparu nécessaire d'étudier un certain nombre de paramètres caractérisant la turbulence de l'atmosphère.

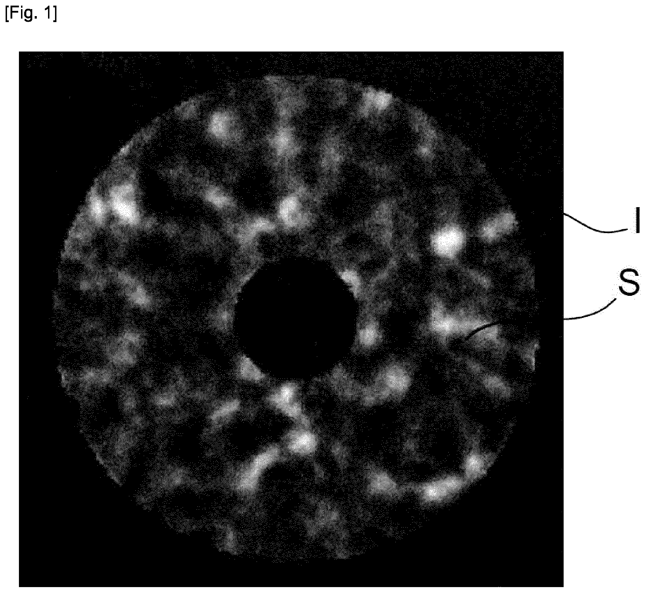

Certains de ces paramètres caractéristiques peuvent être déduits de l'analyse d'images de tavelures optiques (également désignées par le terme anglais « speckles ») acquises par un télescope. La traversée d'une onde lumineuse à travers l'atmosphère turbulente conduit à une dégradation du front d'onde présentant alors des fluctuations aléatoires de la phase. Ceci peut se traduire par plusieurs effets sur l'image observée à travers un télescope au niveau du sol, et notamment la scintillation. Ce phénomène de scintillation est une fluctuation temporelle de l'amplitude de l'onde correspondant à une dilution ou une concentration de l'énergie du front d'onde. Les tavelures consistent en de petites taches brillantes et sombres qui apparaissent de manière fluctuante dans des images de la pupille d'un télescope et qui illustrent ce phénomène de scintillation. Ce sont des structures à haute fréquence qui correspondent aux interférences des rayons déviés par la turbulence. La figure 1 illustre une image I de tavelures.

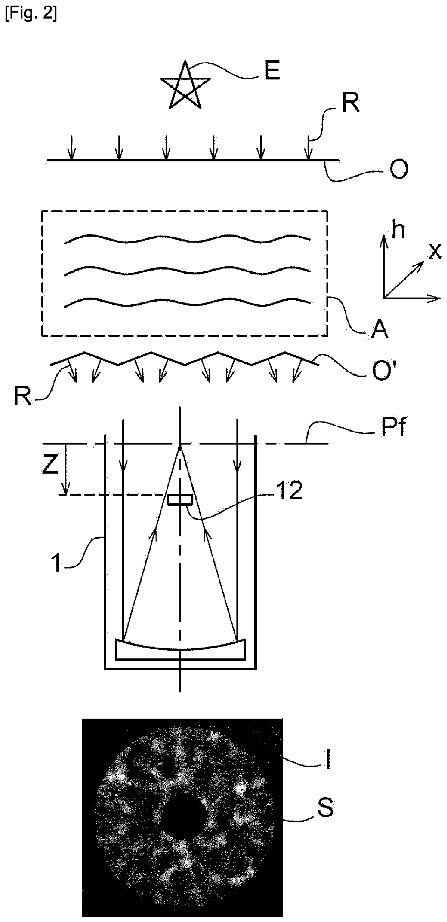

La figure 2 illustre de manière simplifiée la formation d'une image I de tavelures. Les rayons lumineux R qui proviennent d'une étoile E (objet céleste à l'infini) forment une onde plane O. En traversant les couches turbulentes de l'atmosphère A, l'onde O' est perturbée. En visant l'étoile E avec un télescope 1, l'image I obtenue de sa pupille présente des tavelures S induites par l'onde perturbée O'. L'image I est acquise au moyen d'un capteur optique 12 qui est typiquement un capteur CCD (pour l'acronyme anglais Charged Coupled Device) ou CMOS (pour l'acronyme anglais Complementary Metal Oxide Semiconductor) comportant un agencement de pixels. Pour obtenir l'image I de la pupille du télescope 1, le capteur 12 est défocalisé, c'est-à-dire positionné à une distance z (>0) du plan focal Pf dudit télescope.

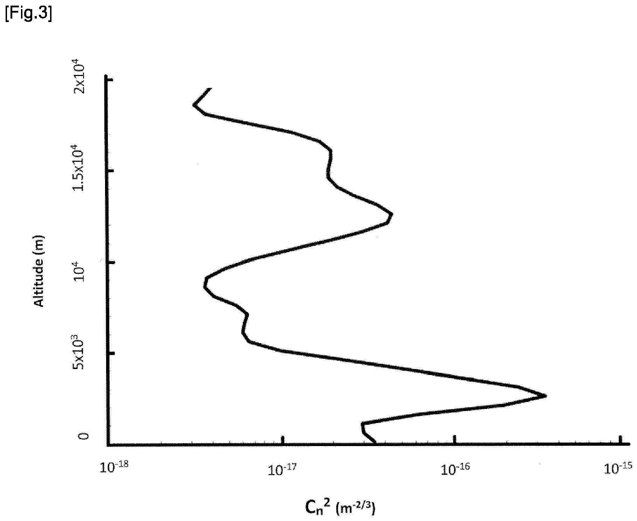

Un paramètre caractérisant les propriétés spatiales de la turbulence atmosphérique et susceptible d'être déduit de l'analyse d'images de tavelures, est le paramètre Cₙ² qui est la constante de structure de l'indice de réfraction de l'air (« *refractive structure parameter »* en anglais), mesurée en m^{-2/3}. Ce paramètre exprime l'intensité de la contribution optique de la turbulence atmosphérique. Variant avec l'altitude h, il est généralement noté Cₙ²(h). La figure 3 illustre un exemple de profil de Cₙ²(h).

Diverses techniques connues de l'homme du métier permettent d'estimer le profil Cₙ² (h) à partir d'image de tavelures acquises en conditions réelles. Les méthodes les plus connues sont : la méthode MASS (pour l'acronyme anglais de Multiple Aperture Scintillation Sensor) [1] ; la méthode SLODAR (pour l'acronyme anglais de SLOpe Détection And Ranging) [2 ; 3 ; 4] ; la méthode SCIDAR (pour l'acronyme anglais de SCintillation Détection And Ranging) [5] ; la méthode SCIDAR généralisée (G-SCIDAR) [6, 7, 8] ; la méthode Stereo-SCIDAR [9] ; la méthode PML (pour l'acronyme anglais de Profiler of Moon Limb) [10] ; la méthode LuSci (pour l'acronyme anglais de Lunar Scintillometer) [11] ; la méthode CO-SLIDAR (pour l'acronyme anglais de COupled SLope and Scintillation Détection And Ranging [12] ; la méthode FASS (pour l'acronyme anglais de Full Aperture Seeing Sensor) [13, 14] ; etc. Ces méthodes non seulement nécessitent d'utiliser des instruments de mesure dédiés qui sont complexes, onéreux et difficiles à installer, mais impliquent encore de mettre en jeu des modèles mathématiques particulièrement complexes pour extraire un profil Cₙ²(h) à partir d'images de tavelures.

Un autre paramètre caractérisant la turbulence de l'atmosphère est le paramètre de Fried, noté r0. Ce paramètre représente la largeur de cohérence spatiale du front d'onde. Le paramètre r0 peut s'exprimer en fonction de Cₙ² (h) [15] et peut donc être déduit de l'analyse d'images de tavelures. Le profil du vent V(h) (où V caractérise la vitesse et la direction du vent et h l'altitude) est un autre paramètre permettant de caractériser une turbulence atmosphérique et qui peut être déduit de l'analyse d'images de tavelures [16, 17]. Les inconvénients liés aux méthodes d'estimation du profil Cₙ² (h) à partir d'images de tavelures sont les mêmes pour l'estimation du paramètre r0 ou du profil du vent V(h).

Les documents brevets CN110083977, US2019/277758 et US2012/078517 divulguent d'autres techniques utilisées pour caractériser la turbulence atmosphérique.

Un objectif de l'invention est de remédier à tout ou partie des inconvénients précités.

Un objectif supplémentaire de l'invention est de pouvoir estimer de manière simple, rapide et à moindre coût, au moins un paramètre caractéristique de la turbulence atmosphérique.

Un autre objectif de l'invention est d'obtenir une méthode robuste, fiable et précise pour interpréter des images de tavelures optiques acquises en condition réelle d'observation, afin d'en déduire un ou plusieurs paramètres caractéristiques de la turbulence atmosphérique.

Encore un autre objectif de l'invention est de pouvoir estimer un paramètre caractéristique de la turbulence atmosphérique, sans avoir à utiliser une instrumentation complexe dédiée, mais en pouvant au contraire utiliser un télescope amateur non dédié à ce type d'analyse.

### Présentation de l'invention.

La solution proposée par l'invention est un procédé pour estimer un paramètre caractéristique de la turbulence atmosphérique, ledit procédé comportant les étapes consistant à :
- entrainer un modèle d'apprentissage automatique en utilisant comme données d'apprentissage des valeurs du paramètre caractéristique auxquelles sont associées des images de tavelures optiques correspondant à des images défocalisées d'une ou plusieurs étoiles,
- utiliser ledit modèle d'apprentissage entrainé pour estimer ledit paramètre caractéristique à partir d'une donnée d'entrée contenant une ou plusieurs images de tavelures optiques acquises par au moins un télescope de mesure, lesquelles images de tavelures correspondent à des images défocalisées d'une ou plusieurs étoiles observées en conditions réelles par ledit télescope.

Cette méthode d'estimation est maintenant basée sur un modèle d'apprentissage automatique (machine learning en anglais) et donc sur un modèle d'intelligence artificielle. Une fois entrainé, le modèle d'apprentissage est capable d'estimer automatiquement un paramètre caractéristique de la turbulence atmosphérique, notamment un profil Cₙ²(h), un paramètre de Field r0, ou un profil du vent V(h). L'invention permet même d'estimer plusieurs paramètres simultanément si le modèle d'apprentissage est entrainé avec plusieurs paramètres caractéristiques comme données d'apprentissage. Le modèle d'apprentissage entrainé peut être facilement implémenté à moindres coûts dans un télescope amateur, sans qu'il soit nécessaire d'employer une instrumentation spécifiquement dédiée. En outre, l'utilisation d'un modèle d'apprentissage automatique permet de s'affranchir des modèles mathématiques de l'art antérieur, qui reposent généralement sur des hypothèses, des considérations, des approximations et/ou des négligeabilités qui impactent négativement les calculs permettant d'estimer les paramètres caractéristiques. L'invention permet donc d'améliorer l'estimation d'un paramètre caractéristique étudié.

D'autres caractéristiques avantageuses de l'invention sont listées ci-dessous. Chacune de ces caractéristiques peut être considérée seule ou en combinaison avec les caractéristiques remarquables définies ci-dessus. Chacune de ces caractéristiques contribue, le cas échéant, à la résolution de problèmes techniques spécifiques définis plus avant dans la description et auxquels ne participent pas nécessairement les caractéristiques remarquables définies ci-dessus. Ces dernières peuvent faire l'objet, le cas échéant, d'une ou plusieurs demandes de brevet divisionnaires :
- Selon un mode de réalisation, le procédé consiste à : - entrainer le modèle d'apprentissage automatique en utilisant comme données d'apprentissage des valeurs de plusieurs paramètres caractéristiques de la turbulence atmosphérique auxquelles sont associées des images de tavelures optiques correspondants à des images défocalisées d'une ou plusieurs étoiles ; - utiliser ledit modèle d'apprentissage entrainé pour estimer chacun desdits paramètres caractéristiques à partir d'une donnée d'entrée contenant une ou plusieurs images de tavelures optiques acquises par le télescope de mesure.
- Selon un mode de réalisation, le ou les paramètres caractéristiques de turbulence atmosphérique sont choisis dans la liste suivante : un profil Cₙ²(h) où Cₙ² est la constante de structure de l'indice de réfraction de l'air et h l'altitude ; un paramètre de Fried r0 ; un profil du vent V(h) où V caractérise la direction et la vitesse du vent et h l'altitude.
- Selon un mode de réalisation, le procédé consiste à entrainer le modèle d'apprentissage en utilisant comme données d'apprentissage des valeurs d'un paramètre caractéristique de turbulence atmosphérique, chaque valeur étant associée à une image de tavelures acquise réellement ou simulée dans un seul plan de défocalisation.
- Selon un mode de réalisation, le procédé consiste à utiliser comme donnée d'entrée du modèle d'apprentissage entrainé, une image de tavelures acquise dans ledit plan de défocalisation.
- Selon un mode de réalisation, le procédé consiste à entraîner le modèle d'apprentissage en utilisant comme données d'apprentissage plusieurs valeurs d'un paramètre caractéristique de turbulence atmosphérique, chaque valeur étant associée à une série d'images de tavelures acquises réellement ou simulées dans plusieurs plans de défocalisation.
- Selon un mode de réalisation, le procédé consiste à utiliser comme donnée d'entrée du modèle d'apprentissage entrainé, une série d'images de tavelures acquises dans lesdits plans de défocalisation.
- Selon un mode de réalisation, le procédé consiste à entrainer le modèle d'apprentissage en utilisant comme données d'apprentissage plusieurs valeurs d'un paramètre caractéristique de turbulence atmosphérique, chaque valeur étant associée à une série d'images de tavelures acquises réellement ou simulées dans un seul plan de défocalisation et sur une période d'acquisition.
- Selon un mode de réalisation, le procédé consiste à utiliser comme donnée d'entrée du modèle d'apprentissage entrainé, une série d'images de tavelures acquises dans ledit plan de défocalisation et sur ladite période d'acquisition.
- Selon un mode de réalisation, le procédé consiste à entraîner le modèle d'apprentissage en utilisant comme données d'apprentissage plusieurs valeurs d'un paramètre caractéristique de turbulence atmosphérique, chaque valeur étant associée à plusieurs séries d'images de tavelures acquises réellement ou simulées dans plusieurs plans de défocalisation et, pour chaque plan de défocalisation, sur une période d'acquisition.
- Selon un mode de réalisation, le procédé consiste à utiliser comme donnée d'entrée du modèle d'apprentissage entrainé, plusieurs séries d'images de tavelures acquises dans lesdits plans de défocalisation et, pour chaque dit plan de défocalisation, sur ladite période d'acquisition.
- Selon un mode de réalisation, le procédé consiste les différents plans de défocalisation sont situés de part et d'autre d'un plan focal.
- Selon un mode de réalisation, le procédé comprend les étapes consistant à : - utiliser comme données d'apprentissage des images de tavelures simulées à partir de valeurs d'un paramètre caractéristique, la simulation étant réalisée au moyen d'un algorithme de simulation ; - paramétrer l'algorithme de simulation en fonction des caractéristiques du télescope de mesure.
- Selon un mode de réalisation, le procédé consiste à paramétrer l'algorithme de simulation en prenant en compte la longueur focale du télescope de mesure, et/ou la résolution dudit télescope de mesure et/ou, la taille de l'image acquise par ledit télescope de mesure et/ou la forme d'une pupille dudit télescope de mesure.
- Selon un mode de réalisation, le procédé consiste à utiliser comme données d'apprentissage : - des images de tavelures optiques acquises par au moins un télescope d'entrainement, lesquelles images de tavelures sont formées par des images défocalisées d'une ou plusieurs étoiles observées en conditions réelles par ledit télescope ; - des valeurs d'un paramètre caractéristique associées auxdites images, chaque valeur étant mesurée réellement et/ou estimée en mettant en oeuvre une ou plusieurs des méthodes suivantes : MASS, SLODAR, SCIDAR, G-SCIDAR, Stereo-SCIDAR, PML, LuSci, CO-SLIDAR, FASS, DIMM.
- Selon un mode de réalisation, le procédé comprend les étapes consistant à : - agencer en réseau plusieurs télescopes de mesure, chaque télescope du réseau ayant une position en longitude et en latitude qui lui est propre ; - acquérir une ou plusieurs images de tavelures optiques avec chacun des télescopes ; - utiliser l'ensemble desdites images acquises comme données d'entrée du modèle d'apprentissage entrainé, de manière à estimer le paramètre caractéristique en fonction de la longitude et de la latitude.

Un autre aspect de l'invention concerne une installation pour estimer un paramètre caractéristique d'une turbulence atmosphérique, comportant :
- une unité de traitement configurée pour entraîner un modèle d'apprentissage automatique en utilisant comme données d'apprentissage des valeurs du paramètre caractéristique auxquelles sont associées des images de tavelures optiques correspondant à des images défocalisées d'une ou plusieurs étoiles,
- au moins un télescope de mesure adapté pour acquérir une ou plusieurs images de tavelures optiques correspondant à des images défocalisées d'une ou plusieurs étoiles observées en conditions réelles par ledit télescope,
- une unité de traitement adaptée pour utiliser ledit modèle d'apprentissage entrainé de manière à estimer ledit paramètre caractéristique à partir d'une donnée d'entrée contenant la ou lesdites images de tavelures optiques acquises par ledit télescope de mesure.

### Brève description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
[Fig. 1] précitée illustre une image de tavelure optique.
[Fig. 2] précitée schématise de manière simplifiée la formation d'une image I de tavelures.
[Fig. 3] précitée illustre un exemple de profil de Cₙ²(h).
[Fig. 4A] illustre un premier mode d'entrainement d'un modèle d'apprentissage automatique.
[Fig. 4B] illustre un second mode d'entrainement d'un modèle d'apprentissage automatique.
[Fig. 4C] illustre un troisième mode d'entrainement d'un modèle d'apprentissage automatique.
[Fig. 4D] illustre un quatrième mode d'entrainement d'un modèle d'apprentissage automatique.
[Fig. 5] schématise un premier mode de réalisation d'un télescope de mesure acquérant une image de tavelures.
[Fig. 6] schématise un second mode de réalisation d'un télescope de mesure acquérant une image de tavelures.
[Fig. 7A] illustre un premier mode d'utilisation d'un modèle d'apprentissage automatique entrainé.
[Fig. 7B] illustre un second mode d'utilisation d'un modèle d'apprentissage automatique entrainé.
[Fig. 7C] illustre un troisième d'utilisation d'un modèle d'apprentissage automatique entrainé.
[Fig. 7D] illustre un quatrième mode d'utilisation d'un modèle d'apprentissage automatique entrainé.
[Fig. 8] schématise un réseau de télescope de mesure.

### Description des modes de réalisation.

Le procédé et le système objets de l'invention sont susceptible d'engendrer des manipulations d'éléments physiques, notamment des signaux (électriques) et des données numériques, capables d'être stockés, transférés, combinés, comparés, ..., et permettant d'aboutir à un résultat souhaité.

L'invention met en oeuvre une ou plusieurs applications informatiques exécutées par des équipements informatiques. Par souci de clarté, il faut comprendre au sens de l'invention que « un équipement fait quelque chose » signifie « l'application informatique exécutée par une unité de traitement de l'équipement fait quelque chose ». Tout comme « l'application informatique fait quelque chose » signifie « l'application informatique exécutée par l'unité de traitement de l'équipement fait quelque chose ».

Encore par souci de clarté, la présente invention est susceptible de faire référence à un ou plusieurs « processus informatiques ». Ces derniers correspondent aux actions ou résultats obtenus par l'exécution d'instructions d'une ou plusieurs applications informatiques. Aussi, il faut également comprendre au sens de l'invention que « un processus informatique est adapté pour faire quelque chose » signifie « les instructions d'une application informatique exécutées par une unité de traitement font quelque chose ».

Encore par souci de clarté, les précisions suivantes sont apportées à certains termes utilisés dans la description et les revendications :
- « Ressource informatique » peut être compris de façon non limitative comme : composant, matériel, logiciel, fichier, connexion à un réseau informatique, quantité de mémoire RAM, espace de disque dur, bande passante, vitesse de processeur, nombre de CPU, etc.
- « Serveur informatique » peut être compris de façon non limitative comme : dispositif informatique (matériel ou logiciel) comportant des ressources informatiques pour réaliser les fonctions d'un serveur et qui offre des services, ordinateur, pluralité d'ordinateurs, serveur virtuel sur internet, serveur virtuel sur Cloud, serveur virtuel sur une plate-forme, serveur virtuel sur une infrastructure locale, réseaux de serveurs, cluster, noeud, ferme de serveurs, ferme de noeuds, etc.
- « Unité de traitement » peut être compris de façon non limitative comme : processeur, microprocesseurs, CPU (pour Central Processing Unit), GPU (pour Graphics Processing Unit).
- « Application informatique » peut être comprise comme : logiciel, produit programme d'ordinateur, programme informatique ou software, dont les instructions sont notamment exécutées par une unité de traitement.
- « Réseau de communication » peut être compris de façon non limitative comme : réseau internet, réseau cellulaire, réseau satellite, etc. C'est un ensemble d'équipements informatiques reliés entre eux pour échanger, de manière sécurisée ou non, des informations et/ou des données selon un protocole de communication (ISDN, Ethernet, ATM, IP, CLNP, TCP, HTTP, ...) et/ou via des technologies de réseau telles que, mais sans s'y limiter, GSM, EDGE, 2G, 3G, 4G, 5G, etc.
- « Base de données » peut être comprise de façon non limitative comme un ensemble structuré et organisé de données enregistrées sur des supports accessibles par des équipements informatiques et notamment par de serveurs informatiques, et pouvant être interrogées, lues et mises à jour. Des données peuvent y être insérées, récupérées, modifiées et/ou détruites. La gestion et l'accès à la base de données peuvent être assurés par un ensemble d'applications informatiques qui constituent un système de gestion de base de données (SGBD).
- Tel qu'utilisé ici, sauf indication contraire, l'utilisation des adjectifs ordinaux « premier », « deuxième », etc., pour décrire un objet indique simplement que différentes occurrences d'objets similaires sont mentionnées et n'implique pas que les objets ainsi décrits doivent être dans une séquence donnée, que ce soit dans le temps, dans l'espace, dans un classement ou de toute autre manière.
- De même, l'utilisation des adjectifs « droite/gauche », « devant/derrière » etc., permet de décrire simplement la position d'un objet dans la configuration des figures annexées, mais n'implique pas nécessairement qu'en pratique, des objets similaires soient dans la même position.
- « X et/ou Y » signifie : X seul, ou Y seul, ou X et Y.
- D'une manière générale, on appréciera que les différents dessins ne sont pas dessinés à l'échelle d'une figure à l'autre ni à l'intérieur d'une figure donnée, et notamment que les objets sont arbitrairement dessinés pour faciliter la lecture des dessins.

Le procédé objet de l'invention repose sur l'utilisation d'un modèle d'apprentissage automatique qui est entrainé de façon à estimer au moins un paramètre caractéristique de la turbulence atmosphérique à partir d'images de tavelures optiques acquises en condition réelle par un télescope (désigné ci-après par « télescope de mesure »).

Les paramètres caractéristiques susceptibles d'être estimés sont notamment : un profil Cₙ²(h) ; un paramètre de Fiel r0 ; un profil du vent V(h). D'autres paramètres caractéristiques sont susceptibles d'être estimés par le modèle d'apprentissage automatique entrainé. Il suffit pour cela d'utiliser comme données d'apprentissage des images de tavelures optiques associées à un autre paramètre caractéristique recherché.

### Entrainement du modèle d'apprentissage

Les images de tavelures optiques utilisées comme données d'apprentissage correspondent à des images défocalisées, réelles ou simulées, d'une ou plusieurs étoiles.

Selon un mode de réalisation, les images de tavelures utilisées comme données d'apprentissage sont des images acquises en conditions réelles par un instrument optique, notamment un télescope, désigné ci-après par « télescope d'entrainement ». Ces images réelles sont des images défocalisées d'une ou plusieurs étoiles. Ce télescope d'entrainement peut être un instrument dédié à l'acquisition d'images de tavelures. Il peut s'agir du même télescope que le télescope de mesure ou d'un télescope différent.

Selon un mode de réalisation, le télescope d'entrainement est un télescope amateur ou grand public, c'est-à-dire accessible dans le commerce et non dédié à l'acquisition d'images de tavelures. On peut par exemple utiliser un télescope intelligent commercialisé par la société Unistellar^{®} sous la référence eVscope^{®}.

Les valeurs du ou des paramètres caractéristiques associés à ces images réelles acquises par le télescope d'entrainement, peuvent être estimées par une ou plusieurs des méthodes connues précitées : MASS, SLODAR, SCIDAR, G-SCIDAR, Stereo-SCIDAR, PML, LuSci, CO-SLIDAR, FASS, DIMM pour l'acronyme anglais de Differential Image Motion Monitor) [26, 27], etc. Les valeurs des paramètres caractéristiques peuvent également être mesurées réellement, par exemple à l'aide de capteurs installés dans des ballons-sondes atmosphériques, comme décrit dans [18] ou [19]. Il suffit alors de corréler les valeurs mesurées réellement aux images des tavelures acquises pendant la campagne de mesure.

Selon un autre mode de réalisation, les images de tavelures utilisées comme données d'apprentissage sont des images simulées correspondant à des images défocalisées d'une ou plusieurs étoiles. Ces images de tavelures sont simulées - ou modélisées - à partir d'un paramètre caractéristique, par exemple à partir d'un profil Cₙ²(h), d'un paramètre de Fried r0, d'un profil du vent V(h). De telles simulations d'images de tavelures (scintillation screen en anglais) sont notamment décrites dans [20, 21, 22, 23, 24]. Le principe général de ces simulations est le suivant : à une altitude h donnée, on calcule l'effet de l'atmosphère sur l'onde lumineuse. Cet effet porte généralement uniquement sur la phase de l'onde. En s'appuyant sur des modèles de turbulence de Kolmogorov ou Van Karman, cet effet est pris en compte en calculant des « phase screens ». La propagation de cette onde perturbée est ensuite calculée (par exemple par décomposition en ondes planes, par diffraction de Fresnel, ....), typiquement entre l'altitude où la perturbation de phase a été induite, et le sol. Sous l'effet de cette propagation, les perturbations de phase se transforment progressivement en perturbation d'amplitude de l'onde (effet de scintillation). Des implémentations numériques de ces méthodes de calcul sont par exemple décrites dans [22, 23]. Ces calculs peuvent être optimisés en prenant en compte les perturbations de phase induites à différentes altitudes. Il existe également des librairies Python Open source capables de faire ces calculs, par exemple la librairie AOtools [25].

Selon un mode de réalisation, l'algorithme de simulation utilisé pour modéliser les images de tavelures, est paramétré en fonction des caractéristiques du télescope de mesure qui sera employé pour l'acquisition des images de tavelures en condition réelle et qui seront utilisées comme données d'entrée du modèle d'apprentissage entrainé. L'algorithme de simulation est élaboré en prend en compte comme paramètres notamment : la longueur focale du télescope de mesure et/ou sa résolution (taille des pixels du capteur optique) et/ou la taille de l'image acquise (nombre de pixels du capteur optique) et/ou la forme de sa pupille (par exemple : la présence d'une structure mécanique à l'entrée du tube). De cette façon, on fait en sorte que les images simulées utilisées comme données d'apprentissage soient similaires aux images réelles qui seront acquises par le télescope de mesure. En d'autres termes, les images de tavelures sont simulées en se mettant dans des conditions réelles de mesure. Le modèle d'apprentissage s'en trouve plus robuste, plus fiable et plus précis.

Selon un mode de réalisation, les images simulées utilisées comme données d'apprentissage sont affinées ou corrigées par des images réelles acquises par le télescope d'entrainement et qui correspondent aux mêmes paramètres caractéristiques, par exemple à un même profil Cₙ²(h), un même paramètre de Fiel r0, un même profil du vent V(h).

Pour optimiser davantage la robustesse et la précision du modèle d'apprentissage, les images de tavelures sont avantageusement simulées avec des intensités variables. Ces variations d'intensité correspondent aux différentes intensités des étoiles susceptibles d'être observées par le télescope de mesure. Cela évite que le télescope de mesure soit contraint de générer une ou plusieurs images de tavelures en observant en condition réelle une étoile prédéterminée. Le modèle d'apprentissage entrainé peut au contraire accepter comme données d'entrée une ou plusieurs images de tavelures provenant de n'importe quelle étoile.

L'apprentissage automatique est basé sur un modèle d'intelligence artificielle. La base de données d'apprentissage (ou ensemble d'apprentissage) est l'ensemble des couples constitués des valeurs des paramètres caractéristiques associés aux images de tavelures. Le modèle d'apprentissage utilisé est en ce sens un modèle supervisé (supervised learning en anglais). Le modèle utilise cette base d'apprentissage pour élaborer une fonction de prédiction qui permet d'associer une nouvelle entrée (c'est-à-dire une ou plusieurs images de tavelures) à une sortie (c'est-à-dire un profil Cₙ²(h) et/ou un paramètre de Fried r0 et/ou un profil du vent V(h), ...).

Selon un mode de réalisation, le modèle d'apprentissage est basé sur un réseau de neurones artificiels, sur un modèle bayésien, sur un algorithme des k plus proches voisins (k-NN), sur un modèle de Markov caché, et de manière plus générale sur un modèle qui accepte l'image de tavelures en entrée, et qui génère en sortie des valeurs d'un ou plusieurs paramètres caractéristiques d'une turbulence atmosphères tels qu'un profil Cₙ²(h), un paramètre de Fried r0, un profil du vent V(h), ou tout autre paramètre caractéristique d'une turbulence atmosphérique.

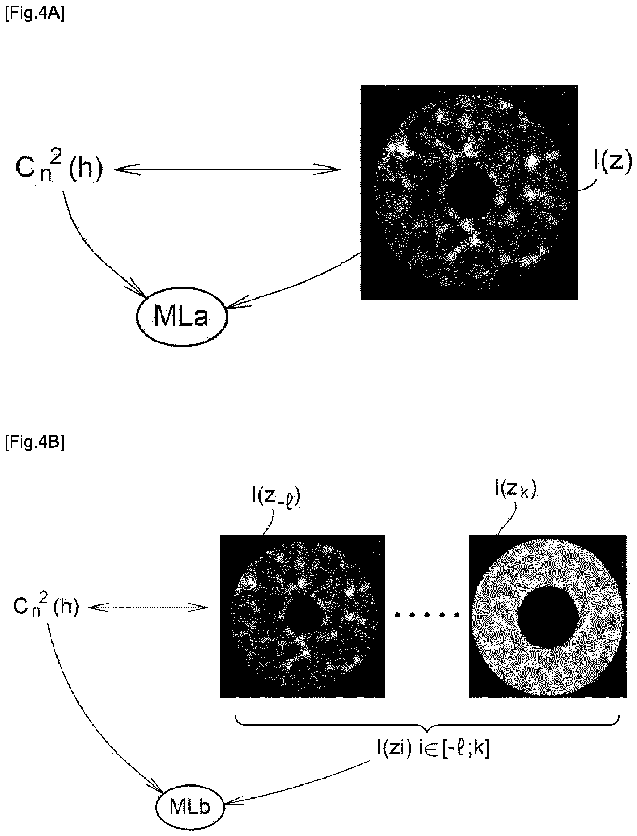

Les figures 4A à 4D illustrent différents modes d'apprentissage - ou d'entrainement - du modèle d'apprentissage automatique ML. Ces modes d'entrainement sont exemplifiés en prenant comme paramètre caractéristique de la turbulence atmosphérique un profil Cₙ²(h). L'homme du métier comprendra aisément que ces modes d'entrainement peuvent être mises en oeuvre avec un autre paramètre caractéristique tel qu'un paramètre de Fried r0 ou un profil du vent V(h). On peut également mettre en oeuvre ces modes d'entrainement avec plusieurs paramètres caractéristiques. Par exemple, le ou les images de tavelures utilisées comme données d'apprentissage sont simultanément associées à un profil Cₙ²(h) et à un paramètre de Fried r0 et/ou à un profil du vent V(h).

On utilise comme données d'apprentissage plusieurs profils Cₙ²(h), chaque profil étant associé à une ou plusieurs images de tavelures. En d'autres termes, et de manière plus générale, on utilise comme données d'entrée plusieurs valeurs d'un même paramètre caractéristique (c.-à-d. plusieurs profils Cₙ²(h)), chaque valeur (c.-à-d. chaque profil Cₙ²(h)) étant associée à une ou plusieurs images de tavelures.

La ou les images I de tavelures utilisées comme données d'apprentissage sont des images réelles ou des images simulées comme expliqué précédemment.

Selon le mode de réalisation de la figure 4A, l'entrainement du modèle MLa est réalisé en associant une seule image I(z) à chaque profil Cₙ²(h). L'image I(z) est une image acquise réellement ou une image simulée dans un seul plan de défocalisation z. Le choix de ce plan de défocalisation z peut être défini selon la méthode décrite dans [14]. La base de données d'apprentissage est ici formée d'une pluralité de couples {Cₙ²(h)-I(z)}, par exemple entre 500 et 10⁶ couples.

Selon le mode de réalisation de la figure 4B, l'entrainement du modèle MLb est réalisé en associant une série d'images I(zi) à chaque profil Cₙ² (h). Les images I(zi) sont ici acquises réellement ou simulées dans plusieurs plans de défocalisation zi (i variant de -I à +k avec par exemple I et k compris entre 0 mm et 3 mm). Pour chaque plan de défocalisation zi, on a donc une image de tavelures. Le nombre de plans de défocalisation zi peut être compris entre 2 et 1000. Les différents plans zi peuvent être situés devant et/ou derrière le plan focal Pf. Un apprentissage avec des plans zi situés devant et derrière le plan focal Pf permet d'optimiser l'estimation des profils Cₙ² (h) aussi bien pour les hautes altitudes (h>10 Km) que pour les basses altitudes (h<500 m) [13, 14]. La base de données d'apprentissage est ici formée d'une pluralité de couples {Cₙ²(h)-I(zi)}, par exemple entre 500 et 10⁶ couples. L'apprentissage du modèle MLb est plus performant que le modèle Mla et permet d'obtenir une meilleure estimation une fois le modèle MLb entrainé.

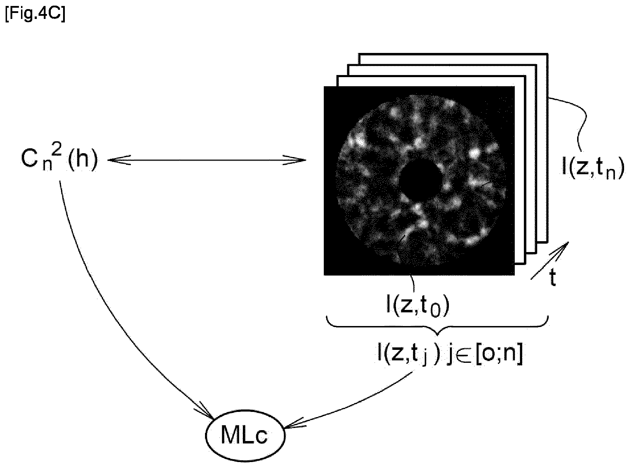

Selon le mode de réalisation de la figure 4C, l'entrainement du modèle MLb est réalisé en associant une série d'images I(z, tj) à chaque profil Cₙ²(h). Les images I(z, tj) sont acquises réellement ou simulées dans un seul plan de défocalisation z comme décrit précédemment en référence au modèle de la figure 4A, mais sur une période d'acquisition tj. L'apprentissage est ainsi également basé sur une analyse de l'effet de scintillation des tavelures. La période d'acquisition tj (j variant de 0 à n) peut par exemple être comprise entre 2 ms (n= 2ms) et 2 minutes (n= 2min). Le nombre d'images I(z, tj) acquises ou simulées sur cette période tj peut par exemple être compris entre 10 et 30.000. La base de données d'apprentissage est donc ici formée d'une pluralité de couples {Cₙ²(h)-I(z,tj)}, par exemple entre 500 et 10⁶ couples. L'apprentissage du modèle MLc est plus performant que le modèle Mla et permet d'obtenir une meilleure estimation une fois le modèle MLc entrainé.

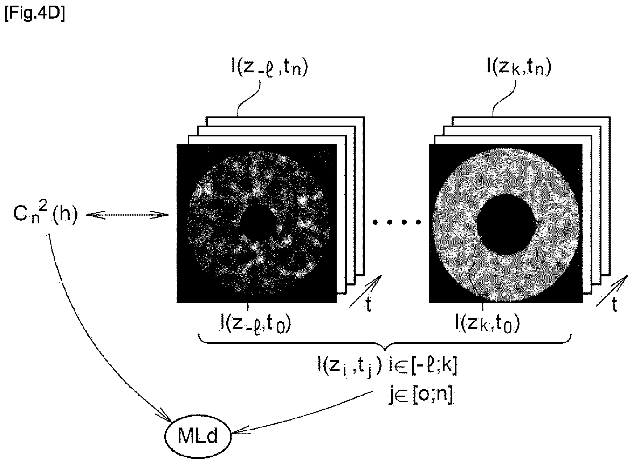

Le mode de réalisation de la figure 4D est une combinaison des modes des figures 4B et 4C. L'entrainement du modèle MLd est réalisé en associant plusieurs séries d'images I(zi, tj) à chaque profil Cₙ² (h). Les images I(zi, tj) sont ici acquises réellement ou simulées dans plusieurs plans de défocalisation zi (comme pour le modèle de la figure 4B) et, pour chaque plan de défocalisation zi, sur une période d'acquisition tj (comme pour le modèle de la figure 4C). La base de données d'apprentissage est ici formée d'une pluralité de couples {Cₙ²(h)-I(zi,tj)}, par exemple entre 500 et 10⁶ couples. L'apprentissage du modèle MLd est plus performant que les modèles Mla, MLb et Mlc et permet d'obtenir une meilleure estimation une fois le modèle MLd entrainé.

L'entrainement du modèle ML peut être basé selon le mode de réalisation de la figure 4A et/ou selon le mode de réalisation de la figure 4B et/ou selon le mode de réalisation de la figure 4C et/ou selon le mode de réalisation de la figure 4D.

Selon un mode de réalisation, l'entrainement du modèle ML est effectué par une unité de traitement, préférentiellement d'un serveur informatique. L'application basée sur ce modèle est ensuite implémentée ultérieurement dans une zone mémoire d'un télescope utilisateur, par exemple par téléchargement. Cette application informatique peut ensuite être enrichie, par exemple par des mises à jour et/ou des téléchargements depuis des bases de données déportées dans un serveur informatique.

### Télescope de mesure utilisé pour l'acquisition des images de tavelures

Un télescope de mesure est utilisé pour acquérir des images de tavelures optiques correspondant à des images défocalisées d'une ou plusieurs étoiles observées en conditions réelles. Ces images peuvent être acquises en orientant le télescope de mesure au zénith ou en orientant ledit télescope entre l'horizon et le zénith, par réglage de son axe de déclinaison. Ces images de tavelures sont les données d'entrée du modèle d'apprentissage entrainé.

Selon un mode de réalisation, le télescope de mesure utilisé est un instrument dédié à l'acquisition de tavelures. Selon un autre mode de réalisation, le télescope 1 est un télescope amateur ou grand public, c'est-à-dire accessible dans le commerce et non dédié à l'analyse de paramètre caractéristique d'une turbulence atmosphérique. On peut par exemple utiliser un télescope intelligent commercialisé par la société Unistellar^{®} sous la référence eVscope^{®}. Il s'agit d'un télescope utilisé pour l'observation d'astres tels que des planètes, des comètes, des nébuleuses, des galaxies, et de manière générale des objets célestes - ou astronomiques - proches ou lointains (notamment des astres du ciel profond ou « deep sky » en anglais).

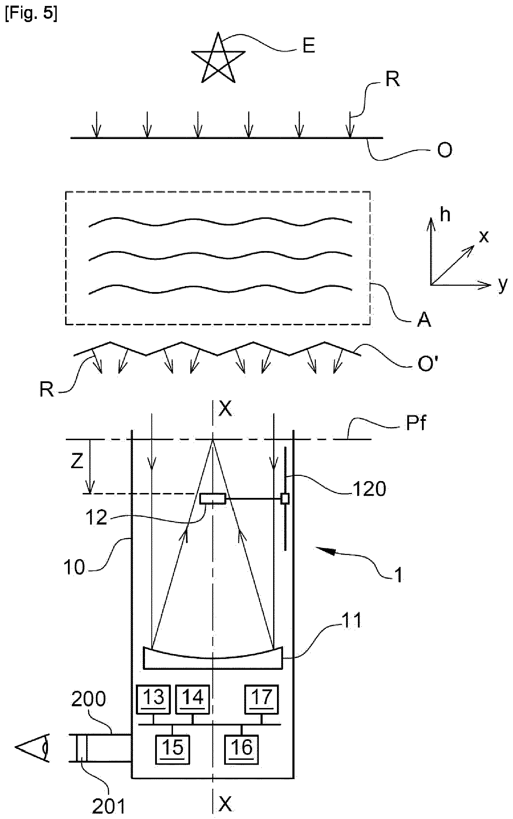

Selon le mode de réalisation de la figure 5, le télescope de mesure 1 comprend notamment un corps creux 10, un système optique 11 et un capteur 12.

Le corps creux 10 se présente par exemple sous la forme d'un tube creux de section circulaire, mais pourrait être un tube de section ovale, carrée, octogonale, ou autre. Il est précisé que le corps creux 10 n'est pas nécessairement de forme tubulaire, mais peut être de forme conique, ou formé de portions de tubes ou de cônes par exemple. Le corps creux 10 peut être réalisé en métal, en matériau plastique, en matériau composite, etc. À titre d'exemple, sa longueur est comprise entre 200 mm et 1000 mm, son diamètre est compris entre 50 mm et 500 mm et son épaisseur est comprise entre 1 mm et 10 mm.

Les rayons lumineux R provenant d'une étoile E observée, pénètrent dans le tube 10 puis sont réfléchis par un miroir primaire 11, qui se présente avantageusement sous la forme d'un miroir parabolique concave à réflexion pure. Les rayons lumineux R réfléchis par le miroir 11 forment, dans un plan focal Pf, une image de l'étoile E.

Le capteur 12 est centré sur l'axe optique X-X et placé à distance du plan focal Pf de manière à acquérir l'image de la pupille du télescope 1, c'est-à-dire l'image de l'extrémité d'entrée 100 du tube 10. Cette image est l'image de tavelures dont on cherche à extraire les valeurs du ou des paramètres caractéristiques de la turbulence atmosphérique.

La position du capteur 12 est notée z. Il s'agit du plan de défocalisation. Selon un mode de réalisation, le capteur 12 est déplaçable de manière à faire varier sa position z. Il est par exemple monté mobile en translation sur une glissière longitudinale 120. Selon un autre mode de réalisation, le capteur 12 reste fixe et on fait varier la configuration du système optique, notamment en déplaçant le miroir primaire 11, pour faire varier la position du plan focal Pf.

Le capteur 12 est positionné dans le plan focal Pf pour une utilisation classique du télescope 1 (c'est-à-dire pour l'observation d'astres) et décaler dudit plan focal pour la mise en oeuvre du procédé selon l'invention. Ces positions z peuvent être situées devant le plan focal Pf, c'est-à-dire entre ledit plan focal et le miroir 11 et/ou situées derrière ledit plan focal, c'est-à-dire entre ledit plan focal et l'extrémité d'entrée 100.

Le capteur 12 est préférentiellement un capteur CCD (pour l'acronyme anglais Charged Coupled Device) ou CMOS (pour l'acronyme anglais Complementary Metal Oxide Semiconductor) comportant un agencement de pixels (préférentiellement en générant des images couleur). Ce type de capteur 12 a des dimensions réduites, ce qui permet de l'installer aisément dans le tube 10, tout en conservant une luminosité optimale. Le diamètre du capteur 12 est par exemple compris entre 15 mm et 30 mm.

Les données d'image générées par le capteur 12 sont transmises à une unité de traitement 13. La connexion entre le capteur 12 et l'unité de traitement 13 peut être réalisée de manière filaire, ou par une liaison sans fil, par exemple selon un protocole de communication de proximité, tel qu'à titre d'exemple non limitatif, le protocole Bluetooth^{®}, Wifi^{®}, ZigBee^{®}. Selon un mode de réalisation, l'unité de traitement 13 est adaptée pour utiliser les images acquises par le capteur 12 comme données d'entrée du modèle d'apprentissage entrainé. Selon un autre mode de réalisation, l'unité de traitement 13 est adaptée pour transmettre les images acquises par le capteur 12, à un serveur informatique distant dans lequel est implémenté le modèle d'apprentissage entrainé, lesquelles images sont les données d'entrée dudit modèle.

Selon un mode de réalisation, le télescope de mesure 1 comporte également une ou plusieurs des ressources informatiques suivantes : une ou plusieurs mémoires 14, un module de communication sans fil 15, une interface réseau 16.

La ou les mémoires 14 doivent être considérées comme un dispositif de stockage également adapté pour stocker des données et/ou des fichiers de données. Il peut s'agir d'une mémoire native ou d'une mémoire rapportée telle qu'une carte Secure Digital (SD). Le modèle d'apprentissage entrainé est préférentiellement enregistré dans cette zone mémoire 14. Une ou plusieurs autres applications informatiques peuvent également être enregistrées dans la zone mémoire 14 et dont les instructions, lorsqu'elles sont exécutées par l'unité de traitement 13, permettent de réaliser des fonctionnalités décrites plus avant dans la description.

Le module de communication sans fil 15 est adapté pour recevoir et émettre des signaux radiofréquences pour communiquer sans fil avec d'autres équipements. Ces signaux radiofréquences sont préférentiellement des signaux utilisant un protocole Bluetooth^{®}, d'autres protocoles tels que ISM, Wifi^{®}, ANT, ZIGBEE^{®} ou autre, pouvant toutefois être utilisés.

L'interface réseau 16 est adaptée pour établir une communication entre le télescope 1 et un serveur informatique distant et/ou un autre équipement électronique distant, via un réseau de communication informatique. Cette interface réseau 16 peut être directement intégrée dans le télescope 10 et se présenter par exemple sous la forme d'un module GSM (pour l'acronyme anglais Global System for Mobile Communication), lui permettant de se connecter à un réseau de communication de téléphonie mobile.

Le télescope de mesure 1 peut également avantageusement intégrer une batterie d'alimentation électrique rechargeable 17, de manière à rendre ledit télescope totalement autonome.

Sur la figure 1, le télescope de mesure 1 intègre un dispositif de visualisation formé d'un (ou deux) oculaire 200 pourvu d'un écran de visualisation 201, par exemple un écran polychrome à cristaux liquides LCD (pour Liquid Crystal Display) ou OLED (pour Organic Light-Emitting Diode). L'unité de traitement 13 est adaptée pour afficher les images acquises par le capteur 12 sur l'écran 101.

Selon un autre mode de réalisation, l'écran 201 est intégré dans un dispositif de visualisation qui est déporté du télescope 1. Il s'agit par exemple d'un visiocasque (également dénommé casque de visualisation, casque immersif, casque-écran ou casque HMD pour l'acronyme anglais de head-mounted display) du type décrit dans le document brevet EP3400474 (GOOGLE) ou d'un écran d'un terminal mobile, par exemple l'écran d'un Smartphone (téléphone intelligent) ou d'une tablette tactile. La connexion entre ce dispositif de visualisation déporté et le télescope 1, et plus particulièrement avec l'unité de traitement 13, peut être réalisée via une liaison filaire (par exemple au moyen d'un câble USB) ou via une liaison sans fil, par exemple selon un protocole de communication de proximité, tel qu'à titre d'exemple non limitatif, le protocole Bluetooth^{®}, Wifi^{®}, ZigBee^{®}.

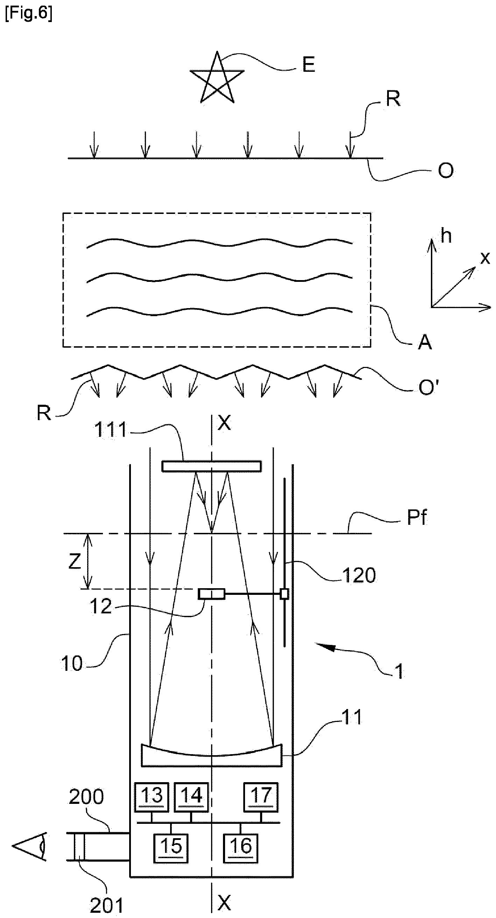

La figure 6 illustre un autre mode de réalisation du télescope de mesure 1. Le système optique est ici formé par :
- un miroir primaire 110 positionné dans le tube 10, pour réfléchir les rayons lumineux R pénétrants dans ledit tube,
- un miroir secondaire 111 positionné dans le tube 10 pour réfléchir les rayons lumineux réfléchis par le miroir primaire 110.

Les miroirs primaire 110 et secondaire 111 sont positionnés sur un même axe optique X-X. Ils sont agencés de manière à ce que les rayons lumineux réfléchis par lesdits miroirs forment, dans le plan focal Pf, une image l'étoile observée. Les miroirs 110, 111 sont agencés de manière à ce que le plan focal Pf soit situé dans le tube 10, entre les deux dits miroirs.

Le miroir primaire 110 est préférentiellement un miroir parabolique concave ayant un rapport focal faible (préférentiellement inférieur à 5). Ce type de miroir permet de s'affranchir des aberrations sphériques. Le diamètre du miroir primaire 110 correspond sensiblement au diamètre du tube 10.

Comparé à l'appareil de la figure 5, à diamètre et focale équivalents de miroir primaire, le fait de ramener le plan focal Pf entre les deux miroirs 110, 111 permet de réduire la longueur focale du système optique et la longueur du télescope 1. Le grossissement des astres observés est plus faible, mais avec comme bénéfice une augmentation du champ visuel et une augmentation de la luminosité de l'image. On peut ainsi observer avec une meilleure qualité d'image des astres peu lumineux tels que des nébuleuses ou des galaxies. La qualité d'image des astres lumineux tels que les planètes ou les étoiles reste très bonne.

La position du capteur 12 est notée z. Comme décrit précédemment, le capteur 12 peut être placé dans différentes positions de défocalisation z situées de part et d'autre du plan focal Pf. Ces positions peuvent être situées devant le plan focal Pf, c'est-à-dire entre ledit plan focal et le miroir primaire 110 et/ou situées derrière ledit plan focal, c'est-à-dire entre ledit plan focal et le miroir secondaire 111. Comme décrit précédemment le capteur 12 peut être monté mobile en translation sur une glissière longitudinale 120 pour faire varier sa position z. Selon un autre mode de réalisation, le capteur 12 reste fixe et on fait varier la configuration du système optique, notamment en déplaçant le miroir primaire 110 et/ou le miroir secondaire 111, pour faire varier la position du plan focal Pf.

### Utilisation du modèle d'apprentissage entrainé

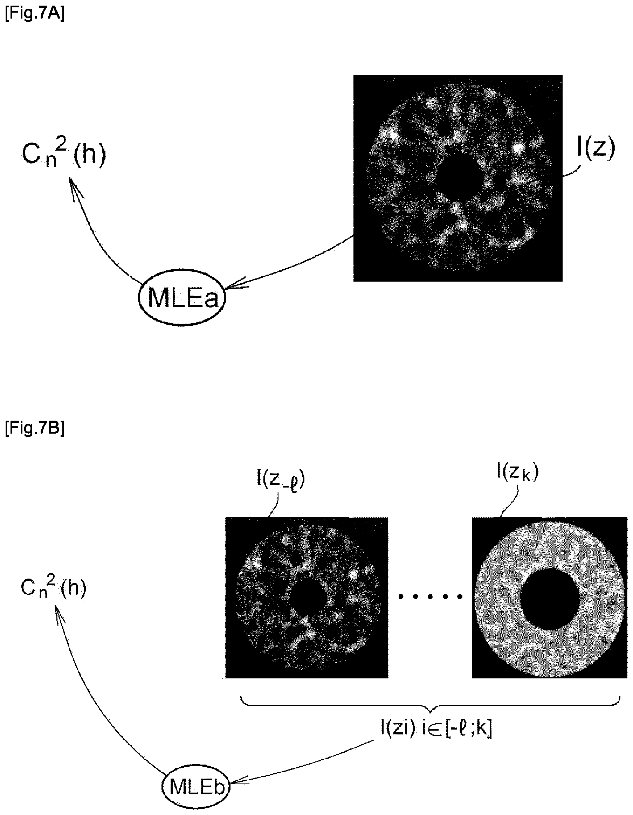

Les figures 7A à 7C illustrent différents modes d'utilisation du modèle d'apprentissage entrainé MLE. Le modèle d'apprentissage entrainé permet d'estimer un ou plusieurs paramètres caractéristiques à partir d'une donnée d'entrée contenant une ou plusieurs images de tavelures optiques acquises par le télescope de mesure 1. Ces images de tavelures sont des images défocalisées d'une ou plusieurs étoiles observées en conditions réelles par le télescope de mesure 1. Le modèle d'apprentissage entrainé MLE peut être implémenté directement dans le télescope de mesure 1, ou être implémenté dans un serveur informatique distant.

Ces modes d'utilisation sont exemplifiés en prenant comme paramètre caractéristique à estimer, un profil Cₙ²(h). L'homme du métier comprendra aisément qu'en fonction de l'entrainement du modèle d'apprentissage, ces modes d'utilisation conviennent également à l'estimation d'un ou plusieurs autres paramètres caractéristiques tels qu'un paramètre de Fried r0, un profil du vent V(h), etc. Pour une donnée d'entrée, le modèle d'apprentissage entrainé peut donc fournir plusieurs données de sortie, correspondant chacune à des valeurs d'un paramètre caractéristique spécifique, par exemple : un profil Cₙ²(h) et un paramètre de Fiel r0 et un profil du vent V(h).

Selon le mode de réalisation de la figure 7A, la donnée d'entrée consiste en une seule image I(z) de tavelures acquise réellement par le capteur 12. Cette image I de tavelures est la donnée d'entrée du modèle d'apprentissage entrainé MLEa. La donnée de sortie est le paramètre caractéristique recherché, ici un profil Cₙ²(h).

Selon un mode de réalisation, le modèle d'apprentissage entrainé MLEa est le modèle MLa entrainé selon le mode de réalisation de la figure 4A. La donnée d'entrée (une seule image de tavelures) correspondant ainsi au type de données d'apprentissage, de sorte que l'estimation du profil Cₙ²(h) est optimisée. Comme indiqué précédemment, l'estimation du profil Cₙ²(h) est d'autant plus précise lorsque le modèle d'apprentissage MLa est entrainé avec des images simulées de tavelures, et que l'algorithme de simulation utilisé est paramétré en fonction des caractéristiques du télescope de mesure 1. L'image réelle I est acquise dans un seul plan de défocalisation z. Afin d'optimiser l'estimation du profil Cₙ²(h), ce plan de défocalisation correspond à celui dans lequel les images utilisées comme données d'apprentissage du modèle MLa ont été simulées.

Le modèle MLa (figure 4A) peut également être entrainé avec des images de tavelures acquises réellement par le télescope d'entrainement. Si le télescope de mesure 1 est le télescope d'entrainement, il suffit de placer le capteur 12 dans le même plan de défocalisation z que celui utilisé pour acquérir les images d'apprentissage. En d'autres termes, le même plan de défocalisation z est utilisé pour l'acquisition des images de tavelures utilisées comme données d'apprentissage du modèle MLa et pour l'acquisition de l'image de tavelures utilisée comme donnée d'entrée du modèle entrainé MLEa.

Si le télescope de mesure 1 est différent du télescope d'entrainement (notamment quant à sa la longueur focale et/ou sa résolution et/ou sa taille d'image acquise et/ou sa forme de pupille), il est avantageux de prévoir un traitement spécifique permettant d'adapter les conditions de mesure aux conditions d'apprentissage de sorte que les données d'entrée du modèle entrainé MLEa sont équivalentes aux données d'apprentissage du modèle MLa. L'estimation du modèle d'apprentissage entrainé MLEa est alors plus précise et plus fiable.

En particulier, si le télescope de mesure 1 a une longueur focale (fₘₑₛᵤᵣₑ) différente de la longueur focale (fₑₙₜᵣₐᵢₙₑₘₑₙₜ) du télescope d'entrainement, il convient d'adapter la défocalisation (zₘₑₛᵤᵣₑ) du capteur 12 dudit télescope de mesure pour qu'elle soit équivalente à la défocalisation (zₑₙₜᵣₐᵢₙₑₘₑₙₜ) du capteur dudit télescope d'entrainement. La position corrigée du plan de défocalisation zₘₑₛᵤᵣₑ du capteur 12 du télescope de mesure 1 peut alors être définie par la formule suivante : zₘₑₛᵤᵣₑ = z_{entraînement} × (fₘₑₛᵤᵣₑ/fₑₙₜᵣₐᵢₙₑₘₑₙₜ)². Cette correction est avantageusement réalisée par l'unité de traitement 13.

De même, les télescopes de mesure et d'entrainement peuvent ne pas avoir la même résolution, la taille des pixels de leur capteur optique respectif étant différente. Il est avantageux dans ce cas d'adapter la résolution du capteur 12 du télescope de mesure 1 pour qu'elle soit équivalente à celle du télescope d'entrainement. Cette adaptation peut par exemple être réalisée selon un algorithme de traitement d'image du type décrit dans [28] ou [29], ou selon un logiciel de traitement d'image proposé par la société Let's Enhance^{®} (https://letsenhance.io). Cette adaptation est avantageusement réalisée par l'unité de traitement 13.

Également, la taille de l'image de mesure acquise (nombre de pixels du capteur optique) par le télescope de mesure 1 peut être différente de la taille de l'image d'apprentissage acquise par le télescope d'entrainement. Il est alors avantageux d'adapter la taille de l'image de mesure pour qu'elle soit équivalente à celle de l'image d'entrainement. Ce redimensionnement peut consister en une mise à l'échelle, un recadrage, une vectorisation, un redimensionnement du type basé sur une interpolation cubique [30], une interpolation linéaire [31] ou non linéaire (par exemple décrit dans US6727908), une interpolation du plus proche voisin [32], etc. Cette adaptation est avantageusement réalisée par l'unité de traitement 13.

En outre, les télescopes de mesure et d'entrainement peuvent ne pas avoir la même la forme de pupille. Par exemple, le télescope d'entrainement peut présenter en entrée de tube une structure supportant un miroir secondaire ou un capteur optique, et dont la forme est différente de celle du télescope de meure 1. La forme d'une telle structure est visible sur les images de tavelures. Il est donc avantageux de prévoir un traitement d'image pour que la forme de la structure apparaissant sur l'image de mesure soit équivalente à celle apparaissant sur l'image d'entrainement. Par exemple, un masque reproduisant la forme de la structure en entrée du télescope d'entrainement peut être rajouté sur l'image de mesure.

Selon le mode de réalisation de la figure 7B, la donnée d'entrée consiste en une série d'images I(zi) de tavelures acquises réellement par le capteur 12. Cette série d'images est la donnée d'entrée du modèle d'apprentissage entrainé MLEb. La donnée de sortie est le paramètre caractéristique recherché, ici un profil Cₙ²(h). Les images I(zi) sont acquises dans plusieurs plans de défocalisation zi (i variant de -I à +k avec par exemple I et k compris entre 0 mm et 3 mm). Pour chaque plan de défocalisation zi, on a donc une image de tavelures. Le nombre de plans de défocalisation zi peut être compris entre 2 et 1000. Les différents plans zi peuvent être situés devant et/ou derrière le plan focal Pf.

Selon un mode de réalisation, le modèle d'apprentissage entrainé MLEb est le modèle MLb (figure 4B). La donnée d'entrée (une série d'images de tavelures) correspondant ainsi au type de données d'apprentissage, de sorte que l'estimation du profil Cₙ²(h) est optimisée. Comme indiqué précédemment, l'estimation du profil Cₙ²(h) est d'autant plus précise lorsque le modèle d'apprentissage MLb est entrainé avec des images simulées de tavelures, et que l'algorithme de simulation utilisé est paramétré en fonction des caractéristiques du télescope de mesure 1. Les images réelles I(zi) sont acquises dans plusieurs plans de défocalisation zi. Afin d'optimiser l'estimation du profil Cₙ²(h), ces plans de défocalisation correspondent à ceux dans lesquels les images utilisées comme données d'apprentissage du modèle MLd ont été simulées.

Le modèle MLb (figure 4B) peut également être entrainé avec des images de tavelures acquises réellement par le télescope d'entrainement. Si le télescope de mesure 1 est le télescope d'entrainement, il suffit de placer le capteur 12 dans les mêmes plans de défocalisation zi que ceux utilisés pour acquérir les images d'apprentissage. Les mêmes plans de défocalisation zi sont donc utilisés pour l'acquisition des images d'apprentissage du modèle MLb et pour l'acquisition des images de mesures utilisées comme donnée d'entrée du modèle entrainé MLEb.

Si le télescope de mesure 1 est différent du télescope d'entrainement (notamment quant à sa longueur focale et/ou sa résolution et/ou sa taille d'image acquise et/ou sa forme de pupille), un traitement d'image spécifique est avantageusement prévu pour adapter les conditions de mesure aux conditions d'apprentissage de sorte que les données d'entrée du modèle entrainé MLEb sont équivalentes aux données d'apprentissage du modèle MLb. Les traitements d'image concernant l'adaptation de la défocalisation, l'adaptation de la résolution, l'adaptation de la taille d'image et/ou d'adaptation de l'image de la pupille sont similaires à ceux décrits en référence à la figure 7A.

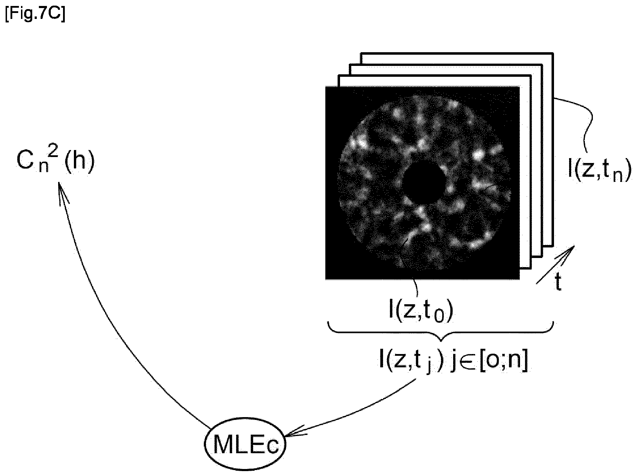

Selon le mode de réalisation de la figure 7C, la donnée d'entrée consiste en une série d'images I(z, tj) de tavelures acquises réellement par le capteur 12. Cette série d'images est la donnée d'entrée du modèle d'apprentissage entrainé MLEc. La donnée de sortie est le paramètre caractéristique recherché, ici un profil Cₙ²(h). Les images I(z, tj) sont acquises dans un seul plan de défocalisation z comme décrit précédemment en référence à la figure 7A, mais sur une période d'acquisition tj (j variant de 0 à n) qui est par exemple comprise entre 2 ms (n= 2ms) et 2 minutes (n= 2min). Le nombre d'images I(z, tj) acquises sur cette période tj peut par exemple être compris entre 10 et 30.000.

Selon un mode de réalisation, le modèle d'apprentissage entrainé MLEc est le modèle MLc (figure 4C). La donnée d'entrée (une série d'images de tavelures) correspondant ainsi au type de données d'apprentissage, de sorte que l'estimation du profil Cₙ²(h) est optimisée. Comme indiqué précédemment, l'estimation du profil Cₙ²(h) est d'autant plus précise lorsque le modèle d'apprentissage MLc est entrainé avec des images simulées de tavelures, et que l'algorithme de simulation utilisé est paramétré en fonction des caractéristiques du télescope de mesure 1. Les images réelles I(z, tj) sont acquises dans un seul plan de défocalisation z. Afin d'optimiser l'estimation du profil Cₙ²(h), ce plan de défocalisation correspond à celui dans lequel les images utilisées comme données d'apprentissage du modèle MLb ont été simulées.

Le modèle MLc (figure 4C) peut également être entrainé avec des images de tavelures acquises réellement par le télescope d'entrainement. Si le télescope de mesure 1 est le télescope d'entrainement, il suffit de placer le capteur 12 dans le même plan de défocalisation z que celui utilisé pour acquérir les images d'apprentissage et d'acquérir les images de mesures sur la même période tj. Le même plan de défocalisation z et la même période d'acquisition sont donc utilisés pour l'acquisition des images d'apprentissage du modèle MLc et pour l'acquisition des images de mesures utilisées comme donnée d'entrée du modèle entrainé MLEc.

Si le télescope de mesure 1 est différent du télescope d'entrainement (notamment quant à sa longueur focale et/ou sa résolution et/ou sa taille d'image acquise et/ou sa forme de pupille), un traitement d'image spécifique est avantageusement prévu pour adapter les conditions de mesure aux conditions d'apprentissage de sorte que les données d'entrée du modèle entrainé MLEc sont équivalentes aux données d'apprentissage du modèle MLc. Les traitements d'image concernant l'adaptation de la défocalisation, l'adaptation de la résolution, l'adaptation de la taille d'image et/ou d'adaptation de l'image de la pupille sont similaires à ceux décrits en référence à la figure 7A.

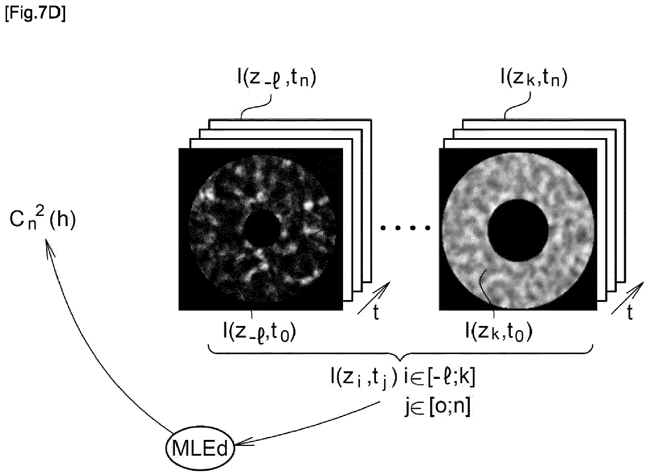

Le mode de réalisation de la figure 7D est une combinaison des modes des figures 7B et 7C. La donnée d'entrée consiste en plusieurs séries d'images I(zi, tj) de tavelures acquises réellement par le capteur 12. L'ensemble de ces séries d'images est la donnée d'entrée du modèle d'apprentissage entrainé MLEd. La donnée de sortie est le paramètre caractéristique recherché, ici un profil Cₙ²(h). Les images I(zi, tj) sont acquises dans plusieurs plans de défocalisation zi (comme pour le modèle de la figure 7B) et sur une période d'acquisition tj (comme pour le modèle de la figure 7C).

Selon un mode de réalisation, le modèle d'apprentissage entrainé MLEd est le modèle MLd (figure 4D). La donnée d'entrée (plusieurs séries d'images de tavelures) correspondant ainsi au type de données d'apprentissage, de sorte que l'estimation du profil Cₙ²(h) est optimisée. Comme indiqué précédemment, l'estimation du profil Cₙ²(h) est d'autant plus précise lorsque le modèle d'apprentissage MLd est entrainé avec des images simulées de tavelures, et que l'algorithme de simulation utilisé est paramétré en fonction des caractéristiques du télescope de mesure 1. Les images réelles I(zi, tj) sont acquises dans plusieurs plans de défocalisation zi. Afin d'optimiser l'estimation du profil Cₙ²(h), ces plans de défocalisation correspondent à ceux dans lesquels les images utilisées comme données d'apprentissage du modèle MLd ont été simulées.

Le modèle MLd (figure 4D) peut également être entrainé avec des images de tavelures acquises réellement par le télescope d'entrainement. Si le télescope de mesure 1 est le télescope d'entrainement, il suffit de placer le capteur 12 dans les mêmes plans de défocalisation zi que ceux utilisé pour acquérir les images d'apprentissage et d'acquérir les images de mesures sur la même période tj. Les mêmes plans de défocalisation zi et la même période d'acquisition sont donc utilisés pour l'acquisition des images d'apprentissage du modèle MLd et pour l'acquisition des images de mesures utilisées comme donnée d'entrée du modèle entrainé MLEd.

Si le télescope de mesure 1 est différent du télescope d'entrainement (notamment quant à sa la longueur focale et/ou sa résolution et/ou sa taille d'image acquise et/ou sa forme de pupille), un traitement d'image spécifique est avantageusement prévu pour adapter les conditions de mesure aux conditions d'apprentissage de sorte que les données d'entrée du modèle entrainé MLEd sont équivalentes aux données d'apprentissage du modèle MLd. Les traitements d'image concernant l'adaptation de la défocalisation, l'adaptation de la résolution, l'adaptation de la taille d'image et/ou d'adaptation de l'image de la pupille sont similaires à ceux décrits en référence à la figure 7A.

### Mise en réseau de plusieurs télescopes de mesure.

L'utilisation d'un seul télescope de mesure 1 permet d'acquérir des images de tavelures en fonction de positions de défocalisation z qui permettent d'estimer un paramètre caractéristique de la turbulence atmosphérique selon l'altitude h, notamment un profil Cₙ²(h) ou un profil de vent V(h). Une turbulence atmosphérique n'est toutefois pas inhomogène uniquement selon l'altitude h, mais également selon la longitude (axe x sur les figures 2, 5 et 6) et la latitude (axe y sur les figures 2, 5 et 6).

Pour estimer un paramètre caractéristique selon la longitude et la latitude de la turbulence atmosphérique, une solution consiste à opérer des mesures selon les modalités expliquées précédemment et en faisant varier l'axe de déclinaison et/ou l'axe d'ascension entre chaque mesure. On obtient ainsi des images de tavelures qui ne dépendent pas uniquement de la défocalisation z et éventuellement du temps t - I(z,t) - mais également de la longitude et de la latitude - I(x,y,z,t). Cette série de mesure peut toutefois se révéler fastidieuse.

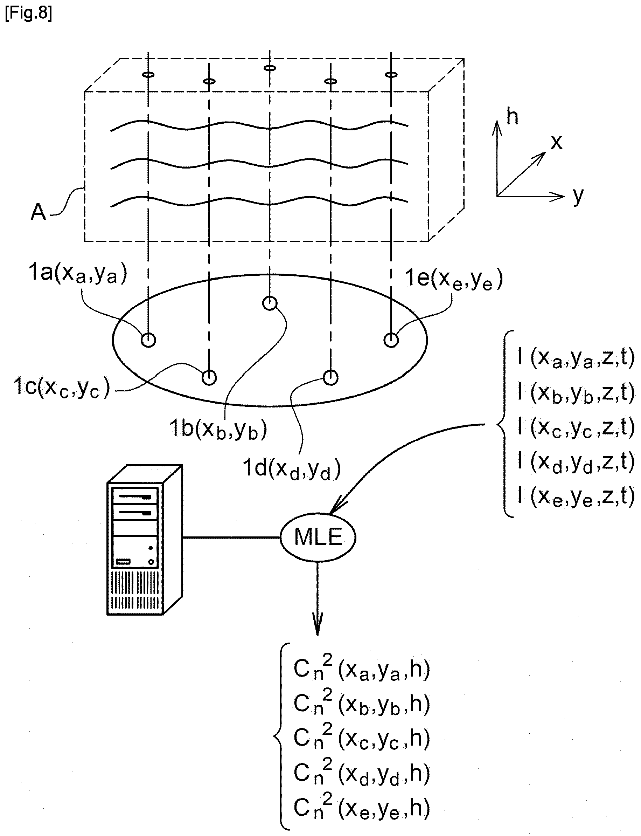

Une solution alternative est schématisée sur la figure 8. Plusieurs télescopes de mesure 1a, 1b, 1c, 1d, 1e sont agencés en réseau. Par exemple, entre 5 et 1000 télescopes de mesures sont mis en réseau. Ces télescopes 1a, 1b, 1c, 1d, 1e sont installés de manière à mailler une zone géographique déterminée Geo, par exemple une ville ou un site d'observation. Chaque télescope 1a, 1b, 1c, 1d, 1e a une position en longitude et en latitude qui lui est propre, respectivement xₐ-yₐ, x_{b}-y_{b}, x_{c}-y_{c}, x_{d}-y_{d}, xₑ-yₑ. Chaque télescope 1a, 1b, 1c, 1d, 1e acquière une ou plusieurs images de tavelures comme expliqué précédemment (c'est-à-dire dans un ou plusieurs plans de défocalisation et/ou sur une période temporelle d'acquisition) qui dépendent également de la longitude et de la latitude dudit télescope. Ces images sont respectivement référencées I(xₐ-yₐ,z,t), I(x_{b}-y_{b},z,t), I(x_{c}-y_{c},z,t), I(x_{d}-y_{d},z,t), I(xₑ-yₑ,z,t) sur la figure 8.

Selon un mode de réalisation, les images I(xₐ-yₐ,z,t), I(x_{b}-y_{b},z,t), I(x_{c}-y_{c},z,t), I(x_{d}-y_{d},z,t), I(xₑ-yₑ,z,t) sont transmises à un serveur informatique distant Serv dans lequel est implémenté le modèle d'apprentissage entrainé MLE. La communication entre les télescopes 1a, 1b, 1c, 1d, 1e peut se faire au travers d'un réseau de communication, par exemple au moyen d'une interface réseau intégrée dans chacun des télescopes du réseau 1a, 1b, 1c, 1d, 1e.

Selon un autre mode de réalisation, les images I(xₐ-yₐ,z,t), I(x_{b}-y_{b},z,t), I(x_{c}-y_{c},z,t), I(x_{d}-y_{d},z,t), I(xₑ-yₑ,z,t) sont transmises à un télescope de mesure « maître », par exemple le télescope 1a, dans lequel est implémenté le modèle d'apprentissage entrainé MLE. La communication entre les télescopes « esclaves » 1b, 1c, 1d, 1e et le télescope « maître » 1a peut ici encore se faire au travers d'un réseau de communication, par exemple au moyen d'une interface réseau intégrée dans chacun des télescopes du réseau 1a, 1b, 1c, 1d, 1e.

Les images I(xₐ-yₐ,z,t), I(x_{b}-y_{b},z,t), I(x_{c}-y_{c},z,t), I(x_{d}-y_{d},z,t), I(xₑ-yₑ,z,t) sont les données d'entrée du modèle entrainé MLE. Le modèle MLE est alors capable d'estimer un paramètre caractéristique, par exemple un profil Cₙ²(h) à différentes longitudes et latitudes, respectivement Cₙ²(xₐ-yₐ,h), Cₙ²(x_{b}-y_{b},h), Cₙ²(x_{c}-y_{c},h), Cₙ²(x_{d}-y_{d},h), Cₙ²(xₑ-yₐ,h). On peut ainsi caractériser la turbulence atmosphérique selon l'altitude, la longitude et la latitude.

Cette caractérisation de la turbulence en altitude, longitude et latitude, est particulièrement utile. Elle peut notamment permettre de détecter la meilleure zone où installer un site d'observation. Elle peut également permettre de détecter une couche d'inversion formée au-dessus d'une ville et d'anticiper des mesures visant à réduire la pollution (par exemple une circulation alternée). On rappelle ici qu'une couche d'inversion est une couche d'air dont le gradient de température est positif. Cette couche d'inversion se comporte comme une « cloche » qui piège la pollution, notamment celle provoquée par le trafic routier ou les fumées de cheminées industrielles. Cette couche d'inversion peut être déduite des profils Cₙ²(xₐ-yₐ,h), Cₙ²(x_{b}-y_{b},h), Cₙ²(x_{c}-y_{c},h), Cₙ²(x_{d}-y_{d},h), Cₙ²(xₑ-yₑ,h).

L'agencement des différents éléments et/ou moyens et/ou étapes de l'invention, dans les modes de réalisation décrits ci-dessus, ne doit pas être compris comme exigeant un tel agencement dans toutes les implémentations. D'autres variantes peuvent être prévues et notamment :
- Le système optique de l'appareil n'est pas nécessairement constitué d'un ou plusieurs miroirs, mais peut comporter une ou plusieurs lentilles en complément ou en substitution desdits miroirs.
- D'autres types de capteurs 12 peuvent être envisagés. Par exemple un capteur de type CCD, CMOS, ou Foveon, de couleur ou noir et blanc.

En outre, une ou plusieurs caractéristiques exposées seulement dans un mode de réalisation peuvent être combinées avec une ou plusieurs autres caractéristiques exposées seulement dans un autre mode de réalisation. De même, une ou plusieurs caractéristiques exposées seulement dans un mode de réalisation peuvent être généralisées aux autres modes de réalisation, même si ce ou ces caractéristiques sont décrites seulement en combinaison avec d'autres caractéristiques.

Références bibliographiques citées et auxquelles l'homme du métier se référera le cas échéant :
[1] - Tokovinin et al. Restoration of turbulence profile from scintillation indices. Mon. Not. R. Astron. Soc. 343, 891-899, 2003.
[2] - Wilson. SLODAR : measuring optical turbulence altitude with a Shack-Hartmann wavefront sensor. Mon. Not. R. Astron. Soc. 337, 103-108, 2002.
[3] - Wilson et al. Development of a portable SLODAR turbulence profiler. Proc. Soc. Photo-Opt. Instrum. Eng., Volume 5490, 2004.
[4] - Wilson et al. The Durham/ESO SLODAR optical turbulence profiler. Mon. Not. R. Astron. Soc. 399, 2129-2138, 2009.
[5] - Robert et al. Mid-infrared Shack-Hartmann wavefront sensor fully cryogénie using extended source for endo-atmospheric applications. Opt. Express 20, 2012.
[6] - Avila et al. Whole atmospheric-turbulence profiling with generalized scidar. Appl. Opt. 36, 7898-7905, 1997.
[7] - Fuchs et al. Focusing on a Turbulent Layer: Principle of the Generalized SCIDAR. Publ. Astron. Soc. Pac. 110, 86-91, 1998.
[8] - Klückers et al. Profiling of atmospheric turbulence strength and velocity using a generalized SCIDAR technique. Astron. Astrophys. Suppl. Ser. 130, 141-155, 1998.
[9] - Osborn et al. Stéréo SCIDAR: Profiling atmospheric optical turbulence with improved altitude resolution. 3rd AO4ELT conférence, 2013.
[10] - Ziad et al. First results of the PML monitor of atmospheric turbulence profile with high vertical resolution. Astron. Astrophys. 559, 2013.
[11] - Tokovinin et al. Near-ground turbulence profiles from lunar scintillometer. Mon. Not. R. Astron. Soc. 404, 1186-1196, 2010.
[12] - Voyez. First on-sky results of the CO-SLIDAR Cn2 profiler. Opt. Express 22, 10948, 2014.
[13] - Guesalaga et al. FASS: the full aperture seeing sensor. Adaptive Optics Systems V, Proc. SPIE 9909, 99090H, July 2016.
[14] - Bechet et al. The Generalized FASS (Full Aperture Seeing Sensor): filling the lower altitudes of the Cn2 profile. AO4ELT5, 2017.
[15] - Roddier. The effects of atmospheric turbulence in optical astronomy. Progress in Optics, E. Wolf, ed. North-Holland, Amsterdam, 1981, Vol. 19, pp. 281-376.
[16] - Avila et al. Atmospheric turbulence and wind profiles monitoring with generalized scidar. A&A 369, 364-372, 2001.
[17] - Caccia et al. Wind and Cn2 profiling by single-star scintillation analysis. Appl. Opt. 26, 1288-1294, 1987.
[18] - Azouit et al. Optical turbulence profiling with balloons relevant to astronomy and atmospheric physics. PASP, 117, 536-543, 2005.
[19] - Abahamid et al. Seeing, outerscale of optical turbulence, and cohérence outer scale at different astronomical sites using instruments on meteorological balloons. A&A 422, 1123-1127, 2004.
[20] - Johansson et al. Simulation of stellar speckle imaging. Amplitude and Intensity Spatial Interferometry II, J. B. Breckinridge, ed., Proc. SPIE 1237, pp.372-383, 1994.
[21] - Laidlaw. Turbulence and wind velocity profiles from adaptive optics telemetry: a general and scalable solution for extremely large télescopes. Durham theses, Durham University, 2020.
[22] - Johnston et al. Modeling scintillation from an aperiodic Kolmogorov phase screen. Appl. Opt. Vol. 39. No. 26, 4761-4769, 2000.
[23] - Sedmak. Implementation of fast-Fourier-transform-based simulations of extra-large atmospheric phase and scintillation screens. Appl. Opt. Vol. 43. No. 23, 4527-4538, 2004.
[24] - Lane et al. Simulation of a Kolmogorov phase screen. Waves Random Media 2, 209 -224, 1992.
[25] - Townson et al. AOtools - a Python package for adaptive optics modelling and analysis. Opt. Express, 27, 31316, 2019.
[26] - Sarazin et al. The ESO differential image motion monitor. A&A 227, 294-300, 1990.
[27] - Kornilov et al. Combined MASS-DIMM instrument for atmospheric turbulence studies. MNRAS, 382, 2007.
[28] - Irani et al. Improving Resolution by Image Registration. Graphical models and image processing. Vol. 53, No. 3, May, pp. 231-239, 1991.
[29] - Sajjadi et al. EnhanceNet: Single image super-resolution through automated texture synthesis. IEEE International Conférence on Computer Vision (ICCV), Oct 2017.
[30] - Keys. Cubic Convolution Interpolation for Digital Image Processing. IEEE Transactions on acoustics, speech and signal processing, Vol. ASSP-29, No. 6, 1981.
[31] - Blu et al. Linear Interpolation Revitalized. IEEE Transactions on image processing, Vol. 13, No. 5, 2004.
[32] - Rukundo et al. Nearest Neighbor Value Interpolation. IJACSA, Vol. 3, No. 4, 2012.

## Revendications

1. Procédé pour estimer un paramètre caractéristique de la turbulence atmosphérique, ledit procédé comportant les étapes consistant à :
- entraîner un modèle d'apprentissage automatique en utilisant comme données d'apprentissage des valeurs du paramètre caractéristique auxquelles sont associées des images de tavelures optiques,
- utiliser ledit modèle d'apprentissage entrainé pour estimer ledit paramètre caractéristique à partir d'une donnée d'entrée contenant une ou plusieurs **images de tavelures optiques**
**caractérisé en ce que**
- les images de tavelures optiques utilisée lors de l'entraînement du modèle d'apprentissage correspondent à des images défocalisées d'une ou plusieurs étoiles,
- la ou les images de tavelures optiques contenues dans ladite donnée d'entrée sont **acquises par au moins un télescope de mesure (1), lesquelles images de tavelures correspondent à des images défocalisées** d'une ou plusieurs étoiles observées en conditions réelles par ledit télescope.

2. Procédé selon la revendication 1, consistant à :
- entrainer le modèle d'apprentissage automatique en utilisant comme données d'apprentissage des valeurs de plusieurs paramètres caractéristiques de la turbulence atmosphérique auxquelles sont associées des images de tavelures optiques correspondants à des images défocalisées d'une ou plusieurs étoiles,
- utiliser ledit modèle d'apprentissage entrainé pour estimer chacun desdits paramètres caractéristiques à partir d'une donnée d'entrée contenant une ou plusieurs images de tavelures optiques acquises par le télescope de mesure (1).

3. Procédé selon l'une des revendications 1 ou 2, dans lequel le ou les paramètres caractéristiques de turbulence atmosphérique sont choisis dans la liste suivante : un profil Cₙ²(h) où Cₙ² est la constante de structure de l'indice de réfraction de l'air et h l'altitude ; un paramètre de Fried r0 ; un profil du vent V(h) où V caractérise la direction et la vitesse du vent et h l'altitude.

4. Procédé selon l'une des revendications 1 à 3, consistant à entrainer le modèle d'apprentissage (MLa) en utilisant comme données d'apprentissage des valeurs d'un paramètre caractéristique de turbulence atmosphérique, chaque valeur étant associée à une image de tavelures acquise réellement ou simulée dans un seul plan de défocalisation (z).

5. Procédé selon la revendication 4, consistant à utiliser comme donnée d'entrée du modèle d'apprentissage entrainé (MLEa), une image de tavelures acquise dans ledit plan de défocalisation (z).

6. Procédé selon l'une des revendications 1 à 3, consistant à entrainer le modèle d'apprentissage (MLb) en utilisant comme données d'apprentissage plusieurs valeurs d'un paramètre caractéristique de turbulence atmosphérique, chaque valeur étant associée à une série d'images de tavelures acquises réellement ou simulées dans plusieurs plans de défocalisation (zi).

7. Procédé selon la revendication 6, consistant à utiliser comme donnée d'entrée du modèle d'apprentissage entrainé (MLEb), une série d'images de tavelures acquises dans lesdits plans de défocalisation (zi).

8. Procédé selon l'une des revendications 1 à 3, consistant à entrainer le modèle d'apprentissage (MLc) en utilisant comme données d'apprentissage plusieurs valeurs d'un paramètre caractéristique de turbulence atmosphérique, chaque valeur étant associée à une série d'images de tavelures acquises réellement ou simulées dans un seul plan de défocalisation (z) et sur une période d'acquisition (tj).

9. Procédé selon la revendication 8, consistant à utiliser comme donnée d'entrée du modèle d'apprentissage entrainé (MLEc), une série d'images de tavelures acquises dans ledit plan de défocalisation (z) et sur ladite période d'acquisition (tj).

10. Procédé selon l'une des revendications 1 à 3, consistant à entrainer le modèle d'apprentissage (MLd) en utilisant comme données d'apprentissage plusieurs valeurs d'un paramètre caractéristique de turbulence atmosphérique, chaque valeur étant associée à plusieurs séries d'images de tavelures acquises réellement ou simulées dans plusieurs plans de défocalisation (zi) et, pour chaque plan de défocalisation (zi), sur une période d'acquisition (tj).

11. Procédé selon la revendication 10, consistant à utiliser comme donnée d'entrée du modèle d'apprentissage entrainé (MLEd), plusieurs séries d'images de tavelures acquises dans lesdits plans de défocalisation (zi) et, pour chaque dit plan de défocalisation (zi), sur ladite période d'acquisition (tj).

12. Procédé selon l'une des revendications 6, 7, 10, 11, dans lequel les différents plans de défocalisation (zi) sont situés de part et d'autre d'un plan focal (Pf).

13. Procédé selon l'une des revendications précédentes, comprenant les étapes consistant à :
- utiliser comme données d'apprentissage des images de tavelures simulées à partir de valeurs d'un paramètre caractéristique, la simulation étant réalisée au moyen d'un algorithme de simulation,
- paramétrer l'algorithme de simulation en fonction des caractéristiques du
télescope de mesure (1).

14. Procédé selon la revendication 12, consistant à paramétrer l'algorithme de simulation en prenant en compte la longueur focale du télescope de mesure (1), et/ou la résolution dudit télescope de mesure et/ou, la taille de l'image acquise par ledit télescope de mesure et/ou la forme d'une pupille dudit télescope de mesure.

15. Procédé selon l'une des revendications 1 à 12, consistant à utiliser comme données d'apprentissage :
- des images de tavelures optiques acquises par au moins un télescope d'entrainement, lesquelles images de tavelures sont formées par des images défocalisées d'une ou plusieurs étoiles observées en conditions réelles par ledit télescope,
- des valeurs d'un paramètre caractéristique associées auxdites images, chaque valeur étant mesurée réellement et/ou estimée en mettant en oeuvre une ou plusieurs des méthodes suivantes : MASS, SLODAR, SCIDAR, G-SCIDAR, Stereo-SCIDAR, PML, LuSci, CO-SLIDAR, FASS, DIMM.

16. Procédé selon l'une des revendications précédentes, comprenant les étapes consistant à :
- agencer en réseau plusieurs télescopes de mesure (1a, 1b, 1c, 1d, 1e), chaque télescope du réseau ayant une position en longitude et en latitude qui lui est propre,
- acquérir une ou plusieurs images de tavelures optiques avec chacun des télescopes (1a, 1b, 1c, 1d, 1e),
- utiliser l'ensemble desdites images acquises comme données d'entrée du modèle d'apprentissage entrainé (MLE), de manière à estimer le paramètre caractéristique en fonction de la longitude et de la latitude.

17. Installation pour estimer un paramètre caractéristique d'une turbulence atmosphérique, selon le procédé conforme à l'une des revendications 1 à 16, comportant :
- une unité de traitement configurée pour entraîner un modèle d'apprentissage automatique en utilisant comme données d'apprentissage des valeurs du paramètre caractéristique auxquelles sont associées des images de tavelures optiques correspondant à des images défocalisées d'une ou plusieurs étoiles,
- au moins un télescope de mesure (1) adapté pour acquérir une ou plusieurs images de tavelures optiques correspondant à des images défocalisées d'une ou plusieurs étoiles observées en conditions réelles par ledit télescope,
- une unité de traitement adaptée pour utiliser ledit modèle d'apprentissage entrainé de manière à estimer ledit paramètre caractéristique à partir d'une donnée d'entrée contenant la ou lesdites images de tavelures optiques acquises par ledit télescope de mesure (1).

## Patentansprüche

1. Verfahren zum Schätzen eines charakteristischen Parameters der atmosphärischen Turbulenz, wobei das Verfahren die Schritte beinhaltet, bestehend aus:
- Trainieren eines automatischen Lernmodells unter Verwendung der Werte des charakteristischen Parameters, denen Bilder von optischen Flecken zugeordnet sind, als Lerndaten,
- Verwenden des trainierten Lernmodells, um den charakteristischen Parameter aus einem Eingabedatum zu schätzen, das ein oder mehrere Bilder von optischen Flecken enthält,
**dadurch gekennzeichnet, dass**
- die Bilder von optischen Flecken, die beim Trainieren des Lernmodells verwendet werden, unscharfen Bildern eines oder mehrerer Sterne entsprechen,
- das oder die Bilder von optischen Flecken, die in dem Eingabedatum enthalten sind, durch mindestens ein Messteleskop (1) erfasst werden, wobei die Fleckenbilder unscharfen Bildern eines oder mehrerer Sterne entsprechen, die unter reellen Bedingungen von dem Teleskop beobachtet worden sind.

2. Verfahren nach Anspruch 1, bestehend aus:
- Trainieren des automatischen Lernmodells unter Verwendung der Werte mehrerer charakteristischer Parameter der atmosphärischen Turbulenz, denen Bilder von optischen Flecken zugeordnet sind, die unscharfen Bildern eines oder mehrerer Sterne entsprechen, als Lerndaten,
- Verwenden des trainierten Lernmodells, um jeden der charakteristischen Parameter aus einem Eingabedatum zu schätzen, welches ein oder mehrere Bilder von optischen Flecken enthält, die von dem Messteleskop (1) erfasst werden.

3. Verfahren nach einem der Ansprüche 1 oder 2, wobei der oder die charakteristischen Parameter einer atmosphärischen Turbulenz aus der folgenden Liste ausgewählt werden: einem Profil Cₙ²(h) wobei Cₙ² die Strukturkonstante des Brechungsindex der Luft ist, und h die Höhe ist; einem Fried-Parameter r0; einem Profil des Windes V(h) wobei V die Richtung und die Geschwindigkeit des Windes, und h die Höhe charakterisieren.

4. Verfahren nach einem der Ansprüche 1 bis 3, das darin besteht, das Lernmodell (MLa) unter Verwendung der Werte eines charakteristischen Parameters einer atmosphärischen Turbulenz als Lerndaten zu trainieren, wobei jeder Wert einem tatsächlich erfassten oder simulierten Bild von optischen Flecken in einer einzigen Defokussierungsebene (z) zugeordnet ist.

5. Verfahren nach Anspruch 4, das darin besteht, ein Bild von Flecken, das in der Defokkussierungsebene (z) erfasst wurde, als Eingabedatum des trainierten Lernmodells (MLEa) zu verwenden.

6. Verfahren nach einem der Ansprüche 1 bis 3, das darin besteht, das Lernmodell (MLb) unter Verwendung mehrerer Werte eines charakteristischen Parameters einer atmosphärischen Turbulenz als Lerndaten zu trainieren, wobei jeder Wert einer Reihe von tatsächlich erfassten oder simulierten Bildern von Flecken in mehreren Defokussierungsebenenen (zi) zugeordnet wird.

7. Verfahren nach Anspruch 6, das darin besteht, eine Reihe von in den Defokussierungsebenen (zi) erfassten Bildern von Flecken als Eingabedatum des trainierten Lernmodells (MLEb) zu verwenden.

8. Verfahren nach einem der Ansprüche 1 bis 3, das darin besteht, das Lernmodell (MLc) unter Verwendung mehrerer Werte eines charakteristischen Parameters einer atmosphärischen Turbulenz als Lerndaten zu trainieren, wobei jeder Wert einer Reihe von tatsächlich erfassten oder simulierten Bildern von Flecken in einer einzigen Defokussierungsebene (z) und über einen Erfassungszeitraum (tj) hinweg zugeordnet wird.

9. Verfahren nach Anspruch 8, das darin besteht, eine Reihe von in der Defokussierungsebene (z) und über den Erfassungszeitraum (tj) hinweg erfassten Bildern von Flecken als Eingabedatum des trainierten Lernmodells (MLEc) zu verwenden.

10. Verfahren nach einem der Ansprüche 1 bis 3, das darin besteht, das Lernmodell (MLd) unter Verwendung mehrerer Werte eines charakteristischen Parameters einer atmosphärischen Turbulenz als Lerndaten zu trainieren, wobei jeder Wert mehreren Reihen von tatsächlich erfassten oder simulierten Bildern von Flecken in mehreren Defokussierungsebenen (zi) und für jede Defokussierungsebene (zi) über einen Erfassungszeitraum (tj) hinweg zugeordnet wird.

11. Verfahren nach Anspruch 10, das darin besteht, mehrere Reihen von in den Defokussierungsebenen (zi) und für jede Defokussierungsebene (zi) über den Erfassungszeitraum (tj) hinweg erfassten Bildern von Flecken als Eingabedatum des trainierten Lernmodells (MLEd) zu verwenden.

12. Verfahren nach einem der Ansprüche 6, 7, 10, 11, wobei sich die verschiedenen Defokussierungsebenen (zi) beiderseits einer Brennebene (Pf) befinden.

13. Verfahren nach einem der vorstehenden Ansprüche, die Schritte umfassend, die darin bestehen:
- als Lerndaten Bilder von Flecken zu verwenden, die aus Werten eines charakteristischen Parameters simuliert werden, wobei die Simulation anhand eines Simulationsalgorithmus durchgeführt wird,
- den Simulationsalgorithmus in Abhängigkeit von den Eigenschaften des Messteleskops (1) zu parametrieren.

14. Verfahren nach Anspruch 12, das darin besteht, den Simulationsalgorithmus unter Berücksichtigung der Brennweite des Messteleskops (1), und/oder der Auflösung des Messteleskops und/oder der Größe des von dem Messteleskop erfassten Bildes und/oder der Form einer Pupille des Messteleskops zu parametrieren.

15. Verfahren nach einem der Ansprüche 1 bis 12, das darin besteht, als Lerndaten zu verwenden:
- Bilder von optischen Flecken, die durch mindestens ein Trainingsteleskop erfasst werden, wobei die Fleckenbilder durch unscharfe Bildern eines oder mehrerer Sterne gebildet sind, die unter reellen Bedingungen von dem Teleskop beobachtet worden sind,
- Werte eines charakteristischen Parameters, die den Bildern zugeordnet sind, wobei jeder Wert tatsächlich gemessen und/oder durch Umsetzen eines oder mehrerer der folgenden Verfahren geschätzt wird: MASS, SLODAR, SCIDAR, G-SCIDAR, Stereo-SCIDAR, PML, LuSci, CO-SLIDAR, FASS, DIMM.

16. Verfahren nach einem der vorstehenden Ansprüche, die Schritte umfassend, die darin bestehen:
- in einem Netzwerk mehrere Messteleskope (1a, 1b, 1c, 1d, 1e) anzuordnen, wobei jedes Teleskop des Netzwerks eine ihm eigene Position in der Länge und in der Breite aufweist,
- ein oder mehrere Bilder von optischen Flecken mit einem der Teleskope (1a, 1b, 1c, 1d, 1e) zu erfassen,
- eine Einheit der erfassten Bilder als Eingabedaten des trainierten Lernmodells (MLE) zu verwenden, um den charakteristischen Parameter in Abhängigkeit von der Länge und der Breite zu schätzen.

17. Installation zum Schätzen eines charakteristischen Parameters der atmosphärischen Turbulenz gemäß dem Verfahren nach einem der Ansprüche 1 bis 16, die beinhaltet:
- eine Bearbeitungseinheit, die konfiguriert ist, um ein automatisches Lernmodell unter Verwendung der Werte des charakteristischen Parameters zu trainieren, denen Bilder von optischen Flecken zugeordnet sind, die unscharfen Bildern eines oder mehrerer Sterne entsprechen, als Lerndaten,
- mindestens ein Messteleskop (1), das angepasst ist, um ein oder mehrere Bilder von optischen Flecken zu erfassen, die unscharfen Bildern eines oder mehrerer Sterne entsprechen, die unter reellen Bedingungen von dem Teleskop beobachtet worden sind,
- eine Bearbeitungseinheit, die angepasst ist, um das trainierte Lernmodell zu verwenden, um den charakteristischen Parameter aus einem Eingabedatum zu schätzen, welches ein oder mehrere Bilder von optischen Flecken enthält, die von dem Messteleskop (1) erfasst werden.

## Claims

1. Method for estimating a parameter characteristic of atmospheric turbulence, said method including the steps consisting in:
- training an automatic learning model using, as learning data, values of the characteristic parameter with which optical speckle images are associated,
- using said trained learning model to estimate said characteristic parameter from input data containing one or more optical speckle images,
**characterised in that**
- the optical speckle images used during the training of the learning model correspond to defocused images of one or more stars,
- the optical speckle image or images contained in said input data are acquired by at least one measurement telescope (1), said speckle images corresponding to defocused images of one or more stars observed under real conditions by said telescope.

2. Method according to claim 1, consisting in:
- training the automatic learning model using, as learning data, values of a plurality of parameters characteristic of atmospheric turbulence with which optical speckle images corresponding to defocused images of one or more stars are associated,
- using said trained learning model to estimate each of said characteristic parameters from input data containing one or more optical speckle images acquired by the measurement telescope (1).

3. Method according to one of claims 1 or 2, wherein the parameter or parameters characteristic of atmospheric turbulence are selected from the following list: a profile Cₙ²(h) where Cₙ² is the structure constant of the refractive index of the air and h the altitude; a Fried parameter r0; a wind profile V(h) where V characterises the direction and speed of the wind and h the altitude.

4. Method according to one of claims 1 to 3, consisting in training the learning model (MLa) using, as learning data, values of a parameter characteristic of atmospheric turbulence, each value being associated with a speckle image actually acquired or simulated in a single defocusing plane (z).

5. Method according to claim 4, consisting in using, as input data of the trained learning model (MLEa), a speckle image acquired in said defocusing plane (z).

6. Method according to one of claims 1 to 3, consisting in training the learning model (MLb) using, as learning data, a plurality of values of a parameter characteristic of atmospheric turbulence, each value being associated with a series of speckle images actually acquired or simulated in a plurality of defocusing planes (z).

7. Method according to claim 6, consisting in using, as input data of the trained learning model (MLEb), a series of speckle images acquired in said defocusing planes (zi).

8. Method according to one of claims 1 to 3, consisting in training the learning model (MLc) using, as learning data, a plurality of values of a parameter characteristic of atmospheric turbulence, each value being associated with a series of speckle images actually acquired or simulated in a single defocusing plane (z) and over an acquisition period (tj).

9. Method according to claim 8, consisting in using, as input data of the trained learning model (MLEc), a series of speckle images acquired in said defocusing plane (z) and over the said acquisition period (tj).

10. Method according to one of claims 1 to 3, consisting in training the learning model (MLd) using, as learning data, a plurality of values of a parameter characteristic of atmospheric turbulence, each value being associated with a plurality of series of speckle images actually acquired or simulated in a plurality of defocusing planes (zi) and, for each defocusing plane (zi), over an acquisition period (tj).

11. Method according to claim 10, consisting in using, as input data of the trained learning model (MLEd), a plurality of series of speckle images acquired in said defocusing planes (zi) and, for each said defocusing plane (zi), over said acquisition period (tj).

12. Method according to one of claims 6, 7, 10, 11, wherein the various defocusing planes (zi) are located on either side of a focal plane (Pf).

13. Method according to one of the preceding claims, comprising the steps consisting in:
- using, as learning data, speckle images simulated from values of a characteristic parameter, the simulation being implemented by means of a simulation algorithm,
- parameterising the simulation algorithm according to the characteristics of the measurement telescope (1).

14. Method according to claim 12, consisting in parameterising the simulation algorithm taking into account the focal length of the measurement telescope (1), and/or the resolution of said measurement telescope and/or the size of the image acquired by said measurement telescope and/or the form of a pupil of said measurement telescope.

15. Method according to one of claims 1 to 12, consisting in using, as learning data:
- optical speckle images acquired by at least one training telescope, said speckle images being formed by defocused images of one or more stars observed under real conditions by said telescope,
- values of a characteristic parameter that are associated with said images, each value being actually measured and/or estimated using one or more of the following methods: MASS, SLODAR, SCIDAR, G-SCIDAR, Stereo-SCIDAR, PML, LuSci, CO-SLIDAR, FASS, DIMM.

16. Method according to one of the preceding claims, comprising the steps consisting in:
- arranging a plurality of measurement telescopes (1a, 1b, 1c, 1d, 1e) in a network, each telescope in the network having a longitude and latitude position that is particular to it,
- acquiring one or more optical speckle images with each of the telescopes (1a, 1b, 1c, 1d, 1e),
- using all said acquired images as input data of the trained learning model (MLE), so as to estimate the characteristic parameter as a function of the longitudinal and latitude.

17. Equipment for estimating a parameter characteristic of atmospheric turbulence, according to the method in accordance with one of claims 1 to 16, including:
- a processing unit configured to train an automatic learning model using, as learning data, values of the characteristic parameter with which optical speckle images corresponding to defocus images of one or more stars are associated,
- at least one measurement telescope (1) adapted to acquire one or more optical speckle images corresponding to defocused images of one or more stars observed under real conditions by said telescope,
- a processing unit adapted to use said trained learning model so as to estimate said characteristic parameter from input data containing said optical speckle image or images acquired by said measurement telescope (1).
